(19)

Europäisches Patentamt
European Patent Office
Office européen des brevets

(11) **EP 4 181 031 A1**

(12) **EUROPEAN PATENT APPLICATION**
published in accordance with Art. 153(4) EPC

(43) Date of publication:
**17.05.2023 Bulletin 2023/20**

(21) Application number: **21837854.5**

(22) Date of filing: **08.07.2021**

(51) International Patent Classification (IPC):
*G06N 10/00* (2022.01)    *B82Y 10/00* (2011.01)
*G02F 3/00* (2006.01)

(52) Cooperative Patent Classification (CPC):
**B82Y 10/00; G02F 3/00; G06N 10/00**

(86) International application number:
**PCT/JP2021/025783**

(87) International publication number:
**WO 2022/009950 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.07.2020 JP 2020118590**

(71) Applicant: **WASEDA UNIVERSITY**
**Shinjuku-ku**
**Tokyo 169-8050 (JP)**

(72) Inventor: **AOKI, Takao**
**Tokyo 169-8050 (JP)**

(74) Representative: **Michalski Hüttermann & Partner**
**Patentanwälte mbB**
**Kaistraße 16A**
**40221 Düsseldorf (DE)**

(54) **QUANTUM COMPUTING UNIT, SINGLE PHOTON SOURCE, QUANTUM COMPUTING DEVICE, AND QUANTUM COMPUTING METHOD**

(57)    In order to deterministically operate a quantum computing unit (13-m) having a plurality of quantum systems trapped thereto, quantum computing is carried out with use of a quantum computing unit including: an optical nanofiber (131-m) optically connected, via a tapered portion, to an optical fiber (12) through which a photon entering thereto is propagated; and a plurality of quantum systems (132-m) arranged outside the optical nanofiber so as to be arrayed at intervals along a longitudinal direction of the optical nanofiber. Note that at least any one of the quantum systems functions as a qubit interacting with the photon.

FIG. 1

**Description**

Technical Field

The present invention relates to a quantum computing technique, for example, to a distributed quantum computing technique.

Background Art

Quantum computing, which is a new information processing technique based on quantum mechanics, enables high-speed computing that was impossible according to conventional techniques. For large-scale quantum computing, implementation of a large number of qubits is required. However, there is a limitation to the number of qubits that can be implemented in a single unit. As a method for breaking through this limitation to realize large scale quantum computing, there is a "distributed quantum computing" technique that involves a network realized by connecting a large number of small-scale quantum computing units. Monroe et al. propose, as a specific implementation method of the distributed quantum computing, a technique that connects, by photons, ion traps which are used as quantum computing units (e.g., see Non-Patent Literature 1, etc.).

Citation List

Patent Literature

Non-Patent Literature 1
C. Monroe et al., "Large-scale modular quantum-computer architecture with atomic memory and photonic interconnects", Phys. Rev. A 89, 022317 (2014).

Summary of Invention

Technical Problem

With the conventional implementation methods, however, it is difficult to deterministically operate a quantum computing unit having a plurality of atoms trapped thereto.
First, with the method disclosed in Non-Patent Literature 1, it is impossible to connect a plurality of quantum computing units and to deterministically operate the quantum computing units thus connected. Meanwhile, use of an optical-domain cavity quantum electrodynamics (CQED) system enables the deterministic operation. However, in a case where a conventional free space resonator is used for a quantum computing unit that realizes this system, atoms should be positioned within a photon beam narrowed to have a small mode area in the free space resonator. If the photon beam is narrowed in the free space, a region having a mode area where atoms are suitably positioned is quite narrow. Thus, it is difficult to position a plurality of atoms therein while maintaining coupling to the resonator with a required strength. Further, the free space resonator has poor compliance with an optical fiber, and thus requires quite complex, precise adjustment and control. Therefore, it is quite difficult to connect a large number of quantum computing units and concurrently use the quantum computing units while suppressing a loss to a low level. Such a problem occurs not only in a case where an atom is used as a quantum system functioning as a qubit interacting with a state of a photon but also in a case where a quantum system exhibiting an optical response similar to that of the atom is used.
The present invention was made in view of the above circumstances. An aspect of the present invention has an object to deterministically operate a quantum computing unit in which a plurality of quantum systems are arranged.

Solution to Problem

In order to attain the object, a quantum computing unit for quantum computing is provided, the quantum computing unit including: an optical nanofiber optically connected, via a tapered portion, to an optical fiber through which a photon entering thereto is propagated; and a plurality of quantum systems arranged outside the optical nanofiber and arrayed at intervals along a longitudinal direction of the optical nanofiber. Note that at least any one of the quantum systems functions as a quantum system functioning as a qubit interacting with a state of the photon.

Advantageous Effects of Invention

With this, it is possible to deterministically operate a quantum computing unit in which a plurality of quantum systems are arranged.

Brief Description of Drawings

Fig. 1 is a view illustrating an example of a configuration of a quantum computing device in accordance with Embodiment 1.

Fig. 2 is a view illustrating an example of a configuration of a quantum computing unit in accordance with an embodiment.

Fig. 3 is a view schematically illustrating a Λ-type three-level atom.

Fig. 4 is a view illustrating an example of a configuration of a single photon source in accordance with an embodiment.

Fig. 5A is a view illustrating a modeled state in which a photon is caused to enter the quantum computing unit and the photon is emitted therefrom. Fig. 5B is a view illustrating a modeled state in which a photon is caused to enter a half-wave plate and the photon is emitted therefrom.

Fig. 6 is an optical circuit diagram illustrating an example of a method for realizing a quantum gate involving use of two quantum computing units.

Fig. 7 is a view illustrating an example of a configuration of a quantum computing device in accordance with Embodiment 2.

Fig. 8 is an optical circuit diagram illustrating an example of a method for realizing a quantum gate involving use of two quantum computing units.

Fig. 9 is an optical circuit diagram illustrating an example of a method for realizing a quantum gate involving use of three quantum computing units.

Fig. 10 is a view illustrating an example of a configuration of a quantum computing device in accordance with Embodiment 3.

Fig. 11 is an optical circuit diagram illustrating an example of a method for realizing a quantum gate involving use of three quantum computing units.

Fig. 12 is a view illustrating an example of a configuration of a quantum computing device in accordance with Embodiment 4.

Description of Embodiments

The following description will discuss embodiments of the present invention with reference to the drawings.

Embodiment 1

First, Embodiment 1 of the present invention will be discussed.

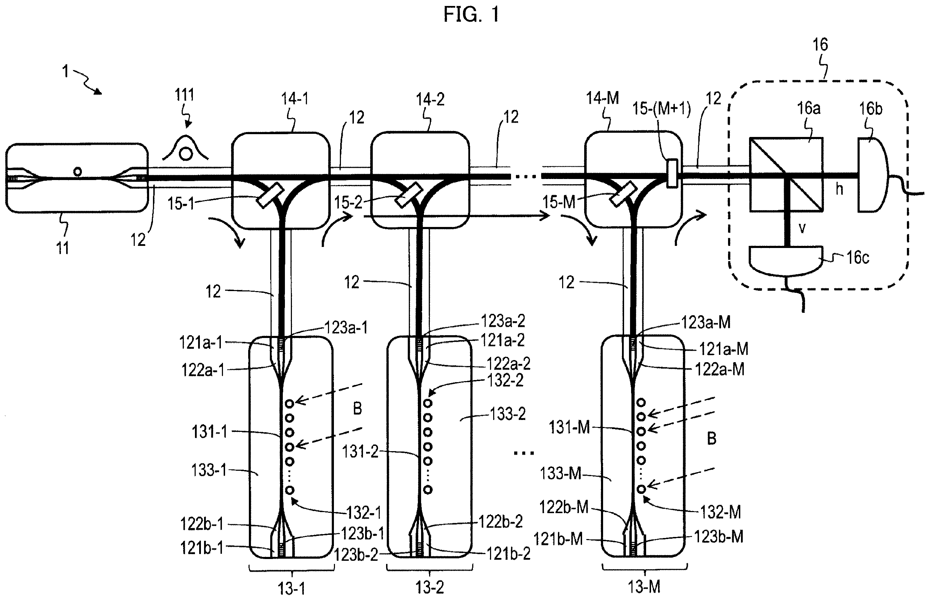

As shown in an example indicated in Fig. 1, a quantum computing device 1 in accordance with Embodiment 1 includes, for quantum computing, a single photon source 11, M quantum computing units 13-1 to 13-M, M optical switches 14-1 to 14-M, half-wave plates 15-1 to 15-(M+1), a polarization state measurement instrument 16, and an optical fiber 12. Note that M is an integer of not less than 2. In one example, the quantum computing device 1 may be used for distributed quantum computing. However, Embodiment 1 is not limited to this. Alternatively, the quantum computing device 1 may be used for non-distributed quantum computing.

<Optical Fiber 12>

Via the optical fiber 12, the single photon source 11, the quantum computing units 13-1 to 13-M, the optical switches 14-1 to 14-M, and the polarization state measurement instrument 16 are optically connected to each other. The optical fiber 12 allows a photon entering thereto to propagate therethrough. In Embodiment 1, one end of the single photon source 11 is optically connected to one end of the optical switch 14-1 via the optical fiber 12. The optical switch 14-i (where i = 1, ... , (M-1)) is optically connected to the optical switch 14-(i+1) and one end of the quantum computing unit 13-i via the optical fiber 12. The optical switch 14-M is optically connected to the polarization state measurement instrument 16 and one end of the quantum computing unit 13-M via the optical fiber 12. The optical fiber 12 may be a single-mode optical fiber or a multi-mode optical fiber. Note that, in a case where the optical fiber 12 is the multi-mode optical fiber, a photon should be caused to stay in a single mode. Therefore, it is desirable that the optical fiber 12 be a single-mode optical fiber.

<Quantum Computing Unit 13-m>

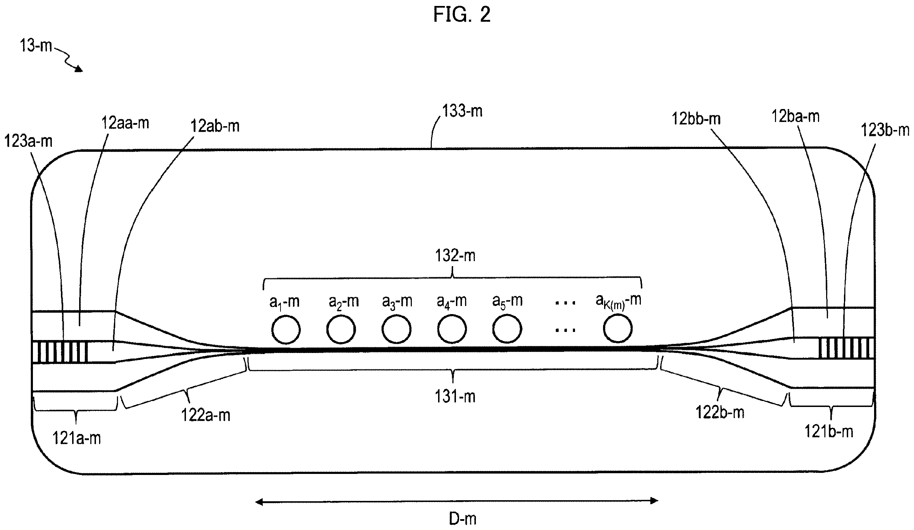

As shown in an example indicated in Fig. 2, the quantum computing unit 13-m in accordance with Embodiment 1 includes an optical nanofiber 131-m, an end portion 121a-m of the optical fiber 12, an end portion 121b-m of the optical fiber 12, tapered portions 122a-m and 122b-m, K(m) atoms 132-m (quantum systems each functioning as a qubit interacting with a state of a photon), and a vacuum layer 133-m in which these elements are housed in a vacuum. Note that $m = 1, \ldots, M$ and M is an integer of not less than 2. Note also that K(m) is an integer of not less than 2 and K(m) atoms 132-m are expressed as $ua_1$-m, $\ldots$, $a_{K(m)}$-m. In one example, the atoms 132-m are laser-cooled atoms. However, the present invention is not limited to this.

The optical nanofiber 131-m is an extremely thin optical fiber having a diameter of not more than a wavelength of light. The whole of the fiber functions as a core, and the vacuum surrounding the fiber functions as a cladding. One end of the optical nanofiber 131-m is optically connected to the end portion 121a-m of the optical fiber 12 via the tapered portion 122a-m. Similarly, the other end of the optical nanofiber 131-m is optically connected to the end portion 121b-m of the optical fiber via the tapered portion 122b-m. That is, this structure can be expressed as follows: In the whole of the fiber including the tapered portions 122a-m and 122b-m (ranging from the end portion 121a-m of the optical fiber 12 to the optical nanofiber 131-m, and further to the end portion 121b-m of the optical fiber 12), a ratio between a core diameter and a cladding diameter is constant or substantially constant. The core of the end portion 121a-m is connected to the core of the optical nanofiber 131-m via the core of the tapered portion 122a-m, and the core of the end portion 121b-m is connected to the core of the optical nanofiber 131-m via the core of the tapered portion 122b-m. The cladding of the end portion 121a-m is connected to the cladding of the optical nanofiber 131-m via the cladding of the tapered portion 122a-m, and the cladding of the end portion 121b-m is connected to the cladding of the optical nanofiber 131-m via the cladding of the tapered portion 122b-m. For example, the core of the optical nanofiber 131-m is integrated with the cores of the tapered portions 122am and 122b-m and the cores of the end portions 121a-m and 121b-m. The cladding of the optical nanofiber 131-m is integrated with the claddings of the tapered portions 122am and 122b-m and the claddings of the end portions 121a-m and 121b-m. Here, diameters of the core and cladding of the end portion 121a-m are respectively larger than diameters of the core and cladding of the optical nanofiber 131-m. Diameters of the core and cladding of the tapered portion 122a-m gradually increase as their increasing proximity from the optical nanofiber 131-m to the end portion 121a-m. Similarly, diameters of the core and cladding of the end portion 121b-m are respectively larger than the diameters of the core and cladding of the optical nanofiber 131-m. Diameters of the core and cladding of the tapered portion 122b-m also gradually increase as their increasing proximity from the optical nanofiber 131-m to the end portion 121b-m. With such a structure, in the optical fiber 12, light is confined due to a refractive index difference between the core and the cladding. In the optical nanofiber 131-m, light is confined due to a refractive index difference between the cladding and the vacuum. In the tapered portions 122a-m and 122b-m via which the optical fiber 12 and the optical nanofiber 131-m are connected to each other, all the three layers, i.e., the core, the cladding, and the vacuum, contribute to confinement of light.

Note that Reference Literatures 1 and 2 also give descriptions about the optical nanofiber. The contents of these reference literatures are hereby incorporated by reference.

Reference Literature 1: S. Kato et al., "Observation of dressed states of distant atoms with delocalized photons in coupled-cavities quantum electrodynamics", Nature Communications volume 10, Article number: 1160 (2019).

Reference Literature 2: S. Kato and T. Aoki, "Strong coupling between a trapped single atom and an all-fiber cavity", Physical Review Letters 115, 9 (2015).

The cores of the end portions 121a-m and 121b-m are respectively provided with fiber Bragg gratings (FBG) 123am and 123b-m each having a reflection bandwidth including a wavelength of a photon propagating through the optical fiber 12. Each of the fiber Bragg gratings 123a-m and 123b-m functions as a mirror that reflects a photon.

By providing the fiber Bragg gratings 123a-m and 123b-m to the cores of the end portions 121a-m and 121b-m, respectively, and adjusting transmittances and reflectances of these fiber Bragg gratings, it is possible to cause a photon entering the optical nanofiber 13 1-m through the end portion 121a-m to be emitted from the optical nanofiber 13 through the end portion 121a-m.

K(m) atoms 132-m (a plurality of atoms $a_1$-m, $\ldots$, $a_{K(m)}$-m) are arranged, by a known trapping method, outside the optical nanofiber 131-m and arrayed at intervals along a longitudinal direction of the optical nanofiber 131-m. For example, K(m) atoms 132-m (the plurality of atoms $a_1$-m, $\ldots$, $a_{K(m)}$-m) are arranged in a single row along the longitudinal direction of the optical nanofiber 131-m. For example, the atoms $a_1$-m, $\ldots$, $a_{K(m)}$-m are desirably arranged at locations corresponding to (i) antinodes of a standing wave created in the optical nanofiber 131-m or (ii) locations in the vicinity of the antinodes. However, the atoms $a_1$-m, $\ldots$, $a_{K(m)}$-m may be arranged at locations corresponding to (i) nodes of the standing wave or (ii) locations in the vicinity of the nodes, provided that, depending on the setting of the standing wave, the atoms $a_1$-m, $\ldots$, $a_{K(m)}$-m can be sufficiently coupled to an optical nanofiber cavity (quantum electrodynamics; QED) system (hereinafter, simply referred to as a "resonator") constituted by the quantum computing unit 13-m even at the locations corresponding to (i) nodes of the standing wave or (ii) locations in the vicinity of the nodes. The atoms 132-m may be neutral atoms or ions. The atoms 132-m may be, e.g., cesium atoms. For example, in a case where the atoms 132-m are neutral atoms, the atoms 132-m are trapped by known dipole trapping or the like. In a case where the atoms 132-m are ions, the atoms 132-m are trapped by a known ion trapping method.

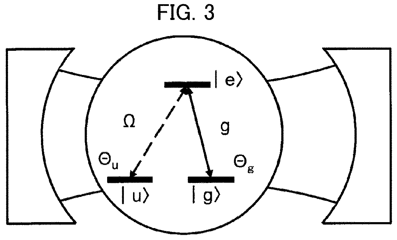

Fig. 3 shows, as an example, a view schematically illustrating a Λ-type three-level atom in a CQED system, which is used as each of the atoms $a_k$-m (where k = 1, ... , K(m)) interacting with a photon propagating through the optical nanofiber 131-m. A real atom $a_k$-m has a complex energy level structure. However, levels actually related to the dynamics of the CQED system are limited to only a few levels (for example, a level(s) that is close to a resonance frequency of the resonator or a frequency of control light (laser light) externally emitted to the atom $a_k$-m and that satisfies a transfer selection rule). Here, a model atom assumed to have an energy level structure having three limited certain levels is called a three-level atom, and a three-level atom as shown in Fig. 3 is called a Λ-type three-level atom. As shown in an example indicated in Fig. 3, the Λ-type three-level atom has two lower levels | u> and | g>, each of which is a ground state, and one upper level | e>, which is an excited state. In a transition from | g> to | e> ( | g> -> | e>), the atom $a_k$-m is coupled to the resonator at a coupling rate g. Meanwhile, in a transition from | u> to | e> ( | u> -> | e>), the atom $a_k$-m is not coupled to the resonator (for the reason that polarization for the transition is orthogonal to polarization of a mode of the resonator or is adequately non-resonant with the resonator and thus the coupling can be practically ignored). Note that it is assumed that the transition | u> -> | e> can be driven by control light emitted by a non-illustrated laser emitting device from the outside of the resonator, and the control light has an amplitude Ω expressed in terms of Rabi frequency. When beams of control light $\Theta_g$ and $\Theta_u$ respectively resonant with the transition | g> -> | e> and the transition | u> -> | e> are emitted to the atom $a_k$-m by the non-illustrated laser emitting device from the outside of the resonator, Λ-type three-level atoms interacting with photons propagating through the optical nanofiber 131-m can cause Rabi oscillations between the two ground state levels (ground levels) | g> and | u> due to coherent Raman transitions or can be regulated to any superposition of them ($\rho_g$ | g> + $\rho_u$ | u>), similarly to the Λ-type three-level atoms interacting with photons in a free space. Here, each of $\rho_g$ and $\rho_u$ is a coefficient of a complex number satisfying | $\rho_g$ |² + | $\rho_u$ |² = 1 (each of | $\rho_g$ | ² and | $\rho_u$ |² indicates a probability).

Here, a case where there is no control light (Ω = 0) will be studied. When the atom $a_k$-m is at the ground level |g>, an optical response of the system is the same as that of a two-level atom having a lower level | g> and an upper level |e>. Provided that a cooperativity parameter C is sufficiently higher than 1, most of entered photons are reflected without being lost, and the phase thereof is not shifted (the amplitude reflectance is 1). Here, the cooperativity parameter of the resonator is expressed as C = g²/2κγ, where κ is an amplitude decay rate given by an external loss and an internal loss of the resonator, γ = Γ/2, and Γ is a decay rate of an energy given by spontaneous emission from the resonator. Meanwhile, when the atom $a_k$-m is at the other ground level |u>, the atom $a_k$-m is not coupled to the resonator, and therefore an optical response of the system is the same as that in a case where there is no atom (the resonator is empty). Thus, most of entered photons are reflected without being lost, and the phase thereof is shifted by π (the amplitude reflectance is -1). That is, by controlling the state of the atom $a_k$-m (quantum state), it is possible to switch the optical response of the system from one to another. Further, in a case where the atom is in a superposition state ($\rho_g$ | g> + $p_u$ | u>) of the two ground states | g> and | u>, the system exhibits a "superposition response" of the above two responses. That is, the state after the entered photons interacted with the CQED system is superposition of "the state where the atom is at the ground level | g> and the entered photons are reflected at an amplitude reflectance of 1" and "the state where the atom is at the ground level | u> and the entered photons are reflected at an amplitude reflectance of -1". That is, entanglement of the atom $a_k$-m and the photon can be created merely by reflecting the photons by the CQED system. With this response, it is possible to realize a quantum gate.

Note that the above-discussed matters about the state where there is no control light (Ω = 0) can be derived from the following facts (a) that Hamiltonian of the system is given by the following formula

$$\hat{H}_{\text{JCA}} = \hbar\omega_A\hat{\sigma}_{eg}\hat{\sigma}_{ge} + \hbar\omega_C\hat{a}_c^\dagger\hat{a}_c + \hbar g(\hat{\sigma}_{eg}\hat{a}_c + \hat{\sigma}_{ge}\hat{a}_c^\dagger)$$

... (Formula 1)

and (b) that an amplitude reflectance coefficient in a steady state at a weak excitation limit is given by the following formula

$$r(\Delta_p) = 1 - \frac{2\kappa_{\text{ex}}(i\Delta_p + \gamma)}{(i\Delta_p + \kappa)(i\Delta_p + \gamma) + g^2}$$

... (Formula 2).

Here, in the formula 1, $\omega_A$ is a transition frequency (resonance frequency) of the atom, and $\sigma_{eg}$ with a hat and

$\sigma_{ge}$ with a hat are respectively raising and lowering operators regarding the levels | e> and | g> of the atom. Further, in the formula 1, $\omega_C$ is a resonance frequency, and each of $a_c$ with a hat and a dagger and $a_c$ with a hat is a creation and annihilation operator of a photon in the resonator. Moreover, as discussed above, g is a coupling rate between the atom and the resonator.

In the formula 2, $\kappa_{ex}$ is an amplitude decay rate given by an external loss, $\kappa$ is an amplitude decay rate given by an external loss and an internal loss of the resonator as discussed above, and $\Delta_p$ is a difference between a frequency $\omega$p of the entered photons and a resonance frequency $\omega_A$ of the atom.

According to the formula 2, it is understood that, if g is not 0, the amplitude reflectance coefficient is given by the following formula when resonance of the atom occurs:

$$r(\Delta_{\mathrm{p}} = 0) = 1 - \frac{2\eta_{esc}}{1 + 2C}$$

$$\ldots \mathrm{(Formula\ 3)}.$$

Here, $\eta_{esc}$ denotes a ratio of the external loss with respect to the total loss, and is also called an escape efficiency. C is the above-described cooperativity parameter. As is clear from the formula 3, if C is sufficiently large, the amplitude reflectance is 1 as discussed above. Thus, most of the entered photons are reflected without being lost, and the phase thereof is not shifted.

Meanwhile, according to the formula 2, it is understood that, if g is 0 (if there is no atom (the resonator is empty)), the amplitude reflectance coefficient is given by the following formula:

$$r(\Delta_{\mathrm{p}}) = 1 - \frac{2\kappa_{ex}}{i\Delta_{\mathrm{p}} + \kappa}$$

$$\ldots \mathrm{(Formula\ 4)}.$$

According to the formula 4, it is understood that the amplitude reflectance coefficient is given by the following formula when resonance of the atom occurs ($\Delta_p$ = 0):

$$r(\Delta_{\mathrm{p}} = 0) = 1 - 2\eta_{esc}$$

$$\ldots \mathrm{(Formula\ 5)}.$$

As is clear from the formula 5, if the escape efficiency is close to 1, the amplitude reflectance is -1 as discussed above. Thus, most of the entered photons are reflected without being lost, and the phase thereof is shifted by $\pi$.

Note that the above-discussed description regarding the "case where there is no control light ($\Omega = 0$)" is applicable to not only

- a case where | u> -> | e> is an optical allowed transition (can be triggered by control light) and control light is not emitted ($\Omega = 0$)
    but also
- a case | u> -> | e> is not an optical allowed transition (cannot be triggered by control light).

In addition, from the viewpoint of using the above configuration as a single photon source, | u> -> | e> is preferably an optical allowed transition. Meanwhile, from the viewpoint of using the above configuration as a quantum computing unit, | u> -> | e> may be or may not be an optical allowed transition.

Next, a case where there is control light ($\Omega \neq 0$) will be studied. In this case, the atom $a_k$-m causes coupling only in a set of levels {|u,n>, |e,n>, |g,n+1>}, and an eigenstate is represented by superposition of them. Here, | i,n> represents a state of the whole of the CQED system | i>$_A$($\times$) | n>c. Note that ($\times$) denotes a tensor product, | i>$_A$ denotes any of the ground states (i.e., | u> or | g>) or the excited state ( | e>) of the atom $a_k$-m, n denotes the number of photons in the resonator, and |n>c denotes a state of the resonator. By changing $\Omega$ from 0 toward $\infty$ sufficiently slowly, it is possible to change the level from | u,n> to | g,n+ 1 > adiabatically with the state of the system kept in a dark state (i.e., without causing excitation to the upper level | e>). Meanwhile, by changing $\Omega$ from $\infty$ toward 0 sufficiently slowly, it is possible to cause the reverse time evolution.

Note that above-discussed matters about the state where there is control light ($\Omega \neq 0$) can be derived from the fact that Hamiltonian of the system is given by the following formula

$$\hat{H}_{\mathrm{JCА}} = \hbar\omega_{\mathrm{A}}\hat{\sigma}_{eg}\hat{\sigma}_{ge} + \hbar\omega_{\mathrm{C}}\hat{a}_{\mathrm{c}}^{\dagger}\hat{a}_{\mathrm{c}} + \hbar g(\hat{\sigma}_{eg}\hat{a}_{\mathrm{c}} + \hat{\sigma}_{ge}\hat{a}_{\mathrm{c}}^{\dagger})$$

$$+ \frac{\hbar\Omega}{2}\left(\hat{\sigma}_{eu}e^{-i\omega_{\mathrm{L}}t} + \hat{\sigma}_{ue}e^{i\omega_{\mathrm{L}}t}\right)$$

$$\dots \text{(Formula 6).}$$

In the formula 6, $\sigma_{eu}$ with a hat and $\sigma_{ue}$ with a hat are respectively raising and lowering operators regarding the levels | u> and | e> of the atom. Further, in the formula 6, $\omega_{\mathrm{L}}$ is a frequency of the control light.

For simplification, assume that $\omega_{\mathrm{C}} = \omega_{\mathrm{L}} = \omega$. Then, an intrinsic energy in an excited state is given by the following formula

$$E_{\mathrm{D}}^{(n)} = n\hbar\omega$$

$$E_{\pm}^{(n)} = n\hbar\omega + \frac{\hbar}{2}\left[\Delta \pm \sqrt{\Delta^2 + 4ng^2 + \Omega^2}\right]$$

$$\dots \text{(Formula 7).}$$

An eigenstate (dark state) corresponding to the first equation in the formula 7 is given by the following formula

$$|\mathrm{D}\rangle = \frac{2g\sqrt{n}|u, n-1\rangle - \Omega|g, n\rangle}{\sqrt{\Omega^2 + 4ng^2}}$$

$$\dots \text{(Formula 8).}$$

As is clear from formula 9, when $\Omega = 0$, | D> = | u,n-1>; and when $\Omega \to \infty$, | D> -> | g,n>. Thus, by changing $\Omega$ from 0 toward $\infty$ sufficiently slowly, it is possible to change the level from |u,n> to |g,n+1> adiabatically with the state of the system kept in a dark state (i.e., without causing excitation to the upper level | e>), as discussed above.

In the CQED system, a state of an atom or a photon can be used as a qubit. In a case where a state of the atom $a_k$-m is used as a qubit, any superposition state ($\rho_g$ | g> + $\rho_u$ | u>) of the atom $a_k$-m functions as a qubit. In this case, a single qubit gate can be easily realized, for example, by emitting beams of control light $\Theta_g$ and $\Theta_u$ respectively resonating with the transitions | g> -> | e> and | u> -> | e> to the atom $a_k$-m from the outside of the resonator. Multi-qubit gates will be described later. In a case where a photon is used as a qubit, a "polarization qubit" or the like may be employed. The polarization qubit uses, as its bases, two orthogonal polarization modes of a photon (e.g., a superposition state $\rho_h$ | h> + $\rho_v$ | v> where lateral (horizontal) polarization | h> and longitudinal (vertical) polarization |v> are used as the ground). Here, each of $\rho_h$ and $\rho_v$ is a coefficient of a complex number satisfying | $\rho_h$ |$^2$ + | $\rho_v$ |$^2$ = 1 (each of | $\rho_h$ |$^2$ and | $\rho_v$ |$^2$ represents a probability). A single qubit gate can be easily realized by use of a linear optical element. For example, with the polarization qubit, it is possible to carry out any unitary transformation with use of a wave plate.

An electric field (evanescent field) of a photon propagating through the optical nanofiber 131-m which evanescent field is outside the optical nanofiber 131-m is approximately expressed as below. At an attenuation length L, the electric field is attenuated exponentially.

$$\mathrm{E} = \mathrm{E}_0 e^{-(r-a)/L}$$

Note that Eo is an electric field on the surface of the optical nanofiber 131-m, e is a bottom of a natural logarithm, r is a distance from a center axis of the optical nanofiber 131-m, and a is a radius of the optical nanofiber 131-m. The attenuation length L depends on a refractive index of the optical nanofiber 131-m, a radius a, and a wavelength $\lambda$ of a photon propagating through the optical nanofiber 131-m, and is approximately a fraction of $\lambda$. Thus, in order to increase the coupling rate g between the atom $a_k$-m and the resonator, a distance between the surface of the optical nanofiber 131-m and the trapping location of the atom $a_k$-m should be approximately not more than the attenuation length L of the evanescent field. As for the distance, the shorter, the better. Meanwhile, for stable trapping of the atom $a_k$-m, it is

necessary to avoid an effect(s) of a van der Waals force from the surface of the optical nanofiber 131-m. Thus, it is necessary to space the trapping location of the atom $a_k$-m apart from the surface of the optical nanofiber 131-m by at least some tens of nano meters. Specifically, it is desirable that (i) a strength of an evanescent field at a location of the plurality of atoms $a_1$-m, ... , $a_{K(m)}$-m with respect to the photon propagating through the optical nanofiber 131-m be not less than a threshold $th_2$ (second threshold) and (ii) van der Waals forces between the plurality of atoms $a_1$-m, ... , $a_{K(m)}$-m and the optical nanofiber 131-m be not more than a threshold ths (third threshold). Considering the trade-off between them, it is desirable that the atom $a_k$-m be trapped at a location separated from the optical nanofiber 131-m by some tens of nanometers to 200 nanometers (e.g., by 100 to 200 nanometers).

In order to realize a high-performance quantum gate when three-level atoms are used as qubits, the above-discussed cooperativity parameter C should be higher than a threshold $TH_1$ (first threshold) (e.g., C > 1). Here, the cooperativity parameter C depends only on the mode area and the total loss of the resonator. As the mode area decreases and the total loss of the resonator decreases, the cooperativity parameter C increases. In Embodiment 1, the optical nanofiber 131-m is used to constitute the resonator. Therefore, in theory, a length of a region where the atoms $a_1$-m, ... , $a_{K(m)}$-m are trapped can be increased as much as desired, while a small mode area is maintained. Further, since the optical nanofiber 131-m is optically connected, via the tapered portion 122a-m, to the end portion 121a-m of the optical fiber 12 through which a photon entering thereto is propagated, the total loss of the resonator can be reduced. Therefore, in theory, increasing the length of the optical nanofiber 131-m makes it possible to trap many atoms $a_1$-m, ... , $a_{K(m)}$-m while the coupling rates g between the resonator and the individual atoms $a_1$-m, ... , $a_{K(m)}$-m are kept sufficiently higher relative to the amplitude decay rate $\kappa$ and the decay rate $\gamma$. Moreover, the multiple quantum computing units 13-m configured as above can be optically connected to each other via the optical fiber 12 with a small loss. This makes it possible to configure a deterministic quantum circuit for distributed quantum computing.

Note that the above-discussed matters about the cooperativity parameter C are derived from the fact that the following formula

$$g \propto \mu_{ge}/\sqrt{AL}$$

$$\kappa \propto (T+\alpha)/L$$

$$\gamma \propto \mu_{ge}^2 \qquad \ldots \text{(Formula 9)}$$

is established according to the definitional equation $C = g^2/2\kappa\gamma$ of the cooperativity parameter C. In the formula 9, $\mu_{ge}$ is a dipole moment of the atom, A is a mode area of the resonator, L is a length of the resonator, T is a transmittance of an input-output coupling mirror, $\alpha$ is an internal loss rate per round trip in the resonator, and T+$\alpha$ is a total loss of the resonator. With use of the formula 9, the cooperativity parameter C is represented by the following formula.

$$C \propto \frac{1}{(T+\alpha)A} \qquad \ldots \text{(Formula 10)}$$

From the formula 10, as discussed above, it is understood (i) that the cooperativity parameter C depends only on the mode area and the total loss of the resonator and (ii) that, as the mode area is smaller and the total loss of the resonator is smaller, the cooperativity parameter C becomes higher.

<Single Photon Source 11>

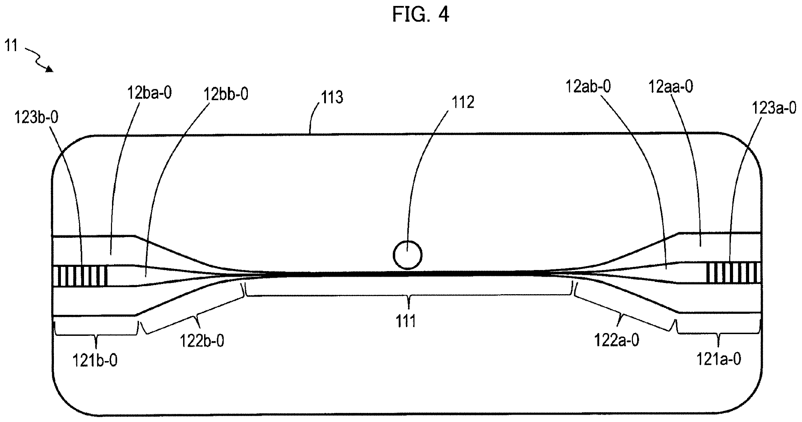

As shown in an example indicated in Fig. 4, the single photon source 11 in accordance with Embodiment 1 includes an optical nanofiber 111, an end portion 121a-0 of the optical fiber 12, an end portion 121b-0 of the optical fiber 12, tapered portions 122a-0 and 122b-0, an atom 112 (quantum systems each having a plurality of levels), and a vacuum layer 113 in which these elements are housed in a vacuum. One end of the optical nanofiber 111 is optically connected to the end portion 121a-0 of the optical fiber 12 via the tapered portion 122a-0. Similarly, the other end of the optical nanofiber 111 is optically connected to the end portion 121b-0 of the optical fiber via the tapered portion 122b-0. That is, this structure can be expressed as follows: In the whole of the fiber including the tapered portions 122a-0 and 122b-0 (ranging from the end portion 121a-0 of the optical fiber 12 to the optical nanofiber 111, and further to the end portion 121b-0 of the optical fiber 12), a ratio between a core diameter and a cladding diameter is constant or substantially constant. The core of the end portion 121a-0 is connected to the core of the optical nanofiber 111 via the core of the tapered portion 122a-0 , and the core of the end portion 121b-0 is connected to the core of the optical nanofiber 111 via the core of the tapered portion 122b-0. The cladding of the end portion 121a-0 is connected to the cladding of the optical nanofiber 111 via the cladding of the tapered portion 122a-0, and the cladding of the end portion 121b-0 is connected to the cladding of the optical nanofiber 111 via the cladding of the tapered portion 122b-0. For example, the core of the optical nanofiber 111 is integrated with the cores of the tapered portions 122a-0 and 122b-0 and the cores of the end portions 121a-0 and 121b-0. The cladding of the optical nanofiber 111 is integrated with the claddings of the tapered portions 122a-0 and 122b-0 and the claddings of the end portions 121a-0 and 121b-0. Here, diameters of the core and cladding of the end portion 121a-0 are respectively larger than diameters of the core and cladding of the optical nanofiber 13 1-0. Diameters of the core and cladding of the tapered portion 122a-0 gradually increase as their increasing proximity from the optical nanofiber 111 to the end portion 121a-0. Similarly, diameters of the core and cladding of the end portion 121b-0 are respectively larger than the diameters of the core and cladding of the optical nanofiber 13 1-0. Diameters of the core and cladding of the tapered portion 122b-0 also gradually increase as their increasing proximity from the optical nanofiber 111 to the end portion 121b-0. With such a structure, in the optical fiber 12, light is confined due to a refractive index difference between the core and the cladding. In the optical nanofiber 111, light is confined due to a refractive index difference between the cladding and the vacuum. In the tapered portions 122a-0 and 122b-0 via which the optical fiber 12 and the optical nanofiber 111 are connected to each other, all the three layers, i.e., the core, the cladding, and the vacuum, contribute to confinement of light. The cores of the end portions 121a-0 and 121b-0 are respectively provided with fiber Bragg gratings 123a-0 and 123b-0 each having a reflection bandwidth including a wavelength of a photon (single photon) to be generated. Each of the fiber Bragg gratings 123a-0 and 123b-0 functions as a mirror. The atom 112 is trapped at a location outside the optical nanofiber 111 by a known trapping method. The atom 112 may be a neutral atom or an ion. The atom 112 may be, e.g., a cesium atom. Conditions for the trapping location of the atom 112 are the same as those for the trapping location of the atom 132-m in the quantum computing unit 13-m, for example, except that the atom 132-m is replaced with the atom 112 and the optical nanofiber 131-m is replaced with the optical nanofiber 111.

A simplest way to realize a deterministic single photon source involving use of the single photon source 11 is a method that is based on the Purcell effect of a two-level atom having a single lower level |g>, which is a ground level, and a single upper level |e>, which is an excited state. That is, similarly to the laser emitting device that emits the above-discussed light-shift light, a non-illustrated laser emitting device may emit control light to the atom 112, for example, so as to excite the atom 112 to the upper level |g>. Merely by this, the photon 111 (single photon) is spontaneously emitted from the end portion 121a-0 toward the optical fiber 12. However, by the method that is based on the Purcell effect of the two-level atom, it is impossible to control the waveform of the photon 111. Use of the A-type three-level atom makes it possible to freely control the waveform of the photon 111. Specifically, a dark state |u,0> where an amplitude of control light is $\Omega = 0$ is set as an initial state. Then, by changing $\Omega$ from 0 toward $\infty$ sufficiently slowly, the state of the system is adiabatically brought into | g,1> while the dark state is maintained. Consequently, the photon 111 (single photon) is generated in the single photon source 11, and the photon 111 is discharged from the end portion 121a-0 to the optical fiber 12. Note that the waveform of the photon can be controlled by a change over time in the amplitude $\Omega$ of the control light.

As is clear from descriptions in other parts of this specification, the expression "deterministic configuration" herein means a configuration that can give a probability of 100% under ideal conditions (conditions in which an experimental loss can be ignored). For example, the single photon source 11 can create a single photon state with a probability of 100%, provided that ideal conditions are attained. Thus, the single photon source 11 is expressed as a "deterministic single photon source".

<Optical Switches 14-m>

Each of the optical switches 14-m (m = 1, ... , M) is a device that allows a photon entering thereto to exit to a selected optical path. The photon to enter and the emitted photon are propagated through the optical fiber 12.

<Half-Wave Plate 15-m'>

A half-wave plate 15-m' (m' = 1, ... , M+1) is a device that rotates the state of an entered photon by $\pi/2$ and allows the photon to exit therefrom. The photon to enter and the emitted photon are propagated through the optical fiber 12.

<Polarization State Measurement Instrument 16>

The polarization state measurement instrument 16 includes a polarization beam splitter 16a and photodetectors 16b and 16c. A photon entering the polarization state measurement instrument 16 via the optical fiber 12 enters the polarization beam splitter 16a. A horizontal polarization | h> component of the photon emitted from the polarization beam splitter 16a is detected by the detector 16b, and a vertical polarization | v> component of that photon is detected by the detector 16c.

<Operation of Quantum Computing Device 1>

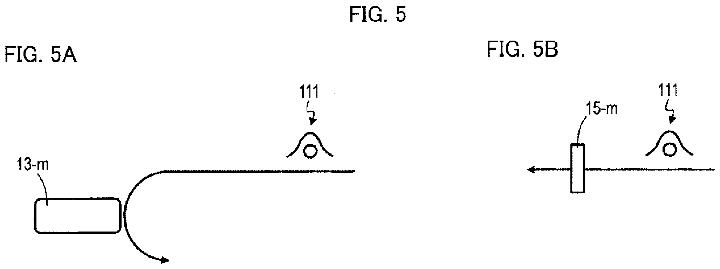

A base of the quantum gate in accordance with Embodiment 1 is a quantum gate between an atom and a photon. Specifically, as shown in an example indicated in Fig. 5A, operation for causing the photon 111 to enter the quantum computing unit 13-m (cavity QED system) corresponds to a quantum gate between an atom and a photon. Here, if the photon 111 is set in a given state (e.g., horizontal polarization | h>) and is not used as a qubit (e.g., measured at an intermediate timing), operation with respect to a plurality of atoms trapped to the quantum computing unit 13-m corresponds to a quantum gate between an atom and an atom. For example, among $K(m)$ atoms 132-m trapped to the quantum computing unit 13-m, $x$ ($x$ is an integer of not less than 2) atoms used for quantum computing are selected (hereinafter, such atoms will be referred to as "selected atoms"), and are irradiated with light-shift light. With this, only the selected atoms are coupled to the resonator, so as to allow the photon 111 to enter the quantum computing unit 13-m. The light-shift light (e.g., laser light) is light having a frequency sufficiently separated from a resonance frequency of the transition | e> -> | g>. By irradiating the atoms with the light-shift light, energies of respective levels of the atoms can be shifted. The shifting of the energies is called "light shift". When the atoms are irradiated with light-shift light having a frequency sufficiently separated from the resonance frequency of the transition | e> -> |g>, the energies of | g> and | e> are shifted. Accordingly, the resonance frequency of the transition | e> - > | g> also changes. While the transition | e> - > | g> resonates with (is coupled to) the resonator, the transition |e> -> | g> stops resonating with the resonator only in the atoms irradiated with the light-shift light. Thus, it is possible to selectively "shut-off" coupling of these atoms with the resonator. Reversely, the resonance frequency of the resonator may be shifted from the resonance frequency of the transition | e> -> | g> observed when the atoms are not irradiated with the light-shift light, and an intensity and/or the like of the light-shift light may be adjusted so as to cause the resonance frequency of the transition | e> -> | g> to resonate with (be coupled to) the resonator upon irradiation of the light-shift light. With this, the state of the selected atoms after the photon 111 is reflected by the quantum computing unit 13-m (i.e., a state expressing an operation result) corresponds to the one obtained by acting, on the state of the selected atoms before the photon 111 is caused to enter the quantum computing unit 13-m (i.e., a state expressing an operand), a control phase flip gate (hereinafter, referred to as a "CPF gate") (in a case of $x = 2$) or an $x$-bit multiple control phase flip gate (i.e., a phase flip gate involving use of $x-1$ qubits as control bits, which will hereinafter be referred to as an "$x$-bit Toffoli gate") (in a case of $x \geq 3$) (for example, see Reference Literature 3, etc.).

Reference Literature 3: L.-M. Duan, B. Wang, and H. J. Kimble, "Robust quantum gates on neutral atoms with cavity-assisted photon scattering", Phys. Rev. A 72, 032333 (2015).

Note that the state of the selected atoms before the photon 111 is caused to enter the quantum computing unit 13-m may be an initialized state (e.g., a state where the state of all the selected atoms is initialized to 0) or a state where single qubit gate operation or multiple qubit gate operation is carried out on the initialized state. In the quantum gate between an atom and an atom, the state of the photon 111 functions to connect a plurality of quantum computing units 13-m with each other.

As shown in an example indicated in Fig. 5B, causing the photon 111 to pass through the half-wave plate 15-m of a rotating angle $\theta/2$ corresponds to rotating the state of the photon 111 by an angle $\theta$ (for example, see Reference Literature 3, etc.). Embodiment 1 employs the half-wave plate 15-m of $\theta = \pi/2$.

In Embodiment 1, distributed quantum computing is carried out by operating, with a non-illustrated control part, the optical switches 14-m ($m = 1, ... , M$) so as to (a) optically connect a plurality of quantum computing units 13-m selected from among M quantum computing units 13-1 to 13-M and (b) cause the photon (single photon) 111 emitted from the single photon source 11 to enter an optical circuit including the selected plurality of quantum computing units 13-m. For example, distributed quantum computing is carried out by operating the optical switches 14-m ($m = 1, ... , M$) so as to (a) optically connect two quantum computing units 13-$m_1$ and 13-$m_2$ ($m_1, m_2 \in \{1, ... , M\}$) (a first quantum computing unit and a second quantum computing unit) and (b) cause the photon 111 to enter an optical circuit including these two quantum computing units 13-$m_1$ and 13-$m_2$.

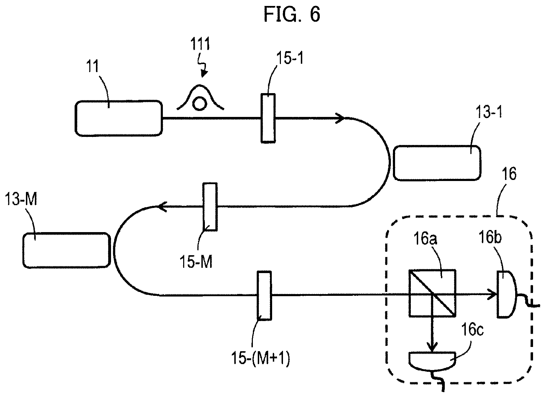

In an example indicated in Fig. 6, the quantum computing units 13-1 and 13-M are selected by operation of the optical switches 14-m ($m = 1, ... , M$). The following will discuss, with reference to Fig. 6, an example of operation in accordance with Embodiment 1. First, $x_1$ selected atom(s) sai selected from among a plurality of atoms 132-1 trapped to the quantum computing unit 13-1 and $x_M$ selected atom(s) sa$_M$ selected from among a plurality of atoms 132-M trapped to the quantum computing unit 13-M are irradiated with light-shift light emitted by a non-illustrated laser emitting device, so as to be coupled to respective resonators. The number of qubits used for the distributed quantum computing is $x_1 + x_M$. Here, $x_1$ and $x_2$ are defined as $x_1 \geq 1$ and $x_M \geq 1$. Alternatively, $x_1$ and $x_2$ may be defined as $x_1 \geq 1$ and $x_M \geq 2$, $x_1 \geq 2$ and $x_M \geq 1$, or $x_1 \geq 2$ and $x_M \geq 2$. In a case where the distributed quantum computing is carried out with use of the pluralities of atoms trapped to the quantum computing units 13-1 and 13-M, $x_1$ and $x_2$ are defined as $x_1 \geq 2$ and $x_M \geq 2$. Alternatively, $x_1$ and $x_2$ may be defined as $x_1 \geq 1$ and $x_M \geq 2$ or $x_1 \geq 2$ and $x_M \geq 1$ (step S10). In this condition, the following series of operations are carried out.

(1) A photon 111 (single photon) in a given state (e.g., horizontal polarization |h>) is generated by the single photon source 11, and the photon 111 thus generated is emitted from the end portion 121a-0 (step S11).

(2) The photon 111 emitted from the single photon source 11 in step S11 is caused to enter the half-wave plate 15-1, so that the state of the photon 111 is rotated by $\pi/2$ and the photon 111 is emitted therefrom (step S12).

(3) The photon emitted from the half-wave plate 15-1 in step S12 is caused to enter an end portion 121a-1 of the quantum computing unit 13-1 (step S13).

(4) The photon emitted from the end portion 121a-1 of the quantum computing unit 13-1 in response to the operation in step S13 is caused to enter the half-wave plate 15-M, so that the state of the photon is rotated by $\pi/2$ and the photon is emitted therefrom (step S14).

(5) The photon emitted from the half-wave plate 15-M in step S14 is caused to enter the end portion 121a-M of the quantum computing unit 13-M (step S15).

(6) The photon emitted from the end portion 121a-M of the quantum computing unit 13-M in response to the operation in step S15 is caused to enter the half-wave plate 15-(M+1), so that the state of the photon is rotated by $\pi/2$ and the photon is emitted therefrom (step S16).

(7) The photon emitted from the half-wave plate 15-(M+1) in step S16 is caused to enter the polarization state measurement instrument 16, and a polarization state of the photon is measured. Consequently, the state of the photon is contracted to a certain polarization state. States of the selected atoms sai and $sa_M$ entangled with the state of the photon are also contracted in accordance with a result of measurement of the polarization state of the photon. Further, rotating operation is carried out on the selected atoms sai trapped to the quantum computing unit 13-1, in accordance with a result of measurement of the polarization state of the photon. That is, if the measured polarization state of the photon is the given state observed in step S11 (e.g., horizontal polarization |h>), n-rotating operation (Z gate operation) is carried out on the selected atoms $sa_1$. This rotating operation can be realized by emitting control light to the selected atoms $sa_1$. If the measured polarization state of the photon is not the given state observed in step S11 (e.g., vertical polarization |v>), no operation is carried out with respect to the selected atoms sai (step S17).

The states of the selected atoms sai and $sa_M$ having been subjected to the above-described operations in steps S11 to S17 are respectively the ones obtained by causing the CPF gate (in a case of $x_1 + x_M = 2$) or the Toffoli gate (in a case of $x_1 + x_M \geq 3$) of $x_1 + x_M$ bits to act on the states of the selected atoms sai and $sa_M$ before these operations are carried out thereon.

Embodiment 2

Next, Embodiment 2 of the present invention will be discussed. The description of Embodiment 2 puts the focus on parts different from Embodiment 1. Description of matters which have been already described will be understood as given with identical reference signs, and omitted below.

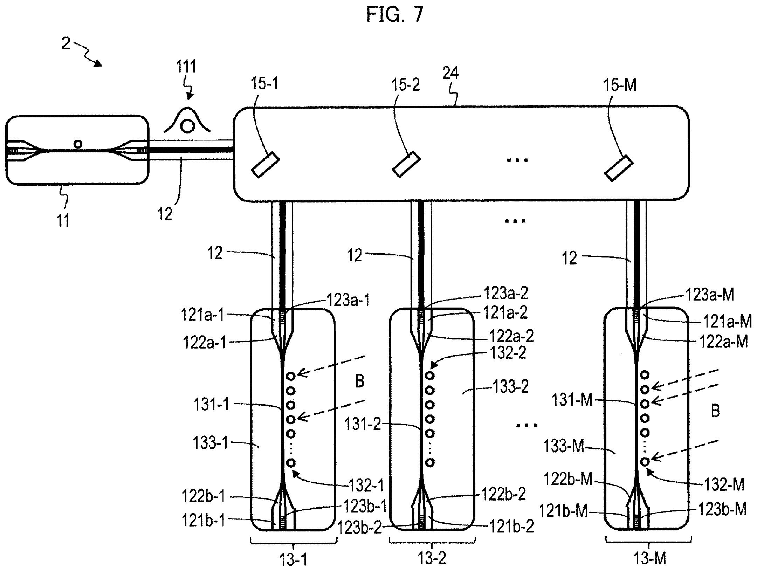

As shown in an example indicated in Fig. 7, a quantum computing device 2 in accordance with Embodiment 2 includes a single photon source 11, M quantum computing units 13-1 to 13-M, an optical switch 24, half-wave plates 15-1 to 15-M, and an optical fiber 12.

<Optical Fiber 12>

Via the optical fiber 12, the single photon source 11, the quantum computing units 13-1 to 13-M, and the optical switch 24 are optically connected to each other. The optical fiber 12 allows a photon entering thereto to propagate therethrough.

<Optical Switch 24>

The optical switch 24 is a device that emits, to a selected optical path, a photon entering thereto. Propagation of the photon to the optical switch 24 and propagation of the photon from the optical switch 24 to the quantum computing unit 13-m are carried out via the optical fiber 12.

<Operation of Quantum Computing Device 2>

In Embodiment 2, distributed quantum computing is carried out by operating an optical switch 24 with a non-illustrated control part so as to (a) optically connect a plurality of quantum computing units 13-m selected from among M quantum computing units 13-1 to 13-M and (b) cause a photon (single photon) 111 emitted from the single photon source 11 to enter an optical circuit including the selected plurality of quantum computing units 13-m. The following will indicate operation examples.

<Operation Example 1>

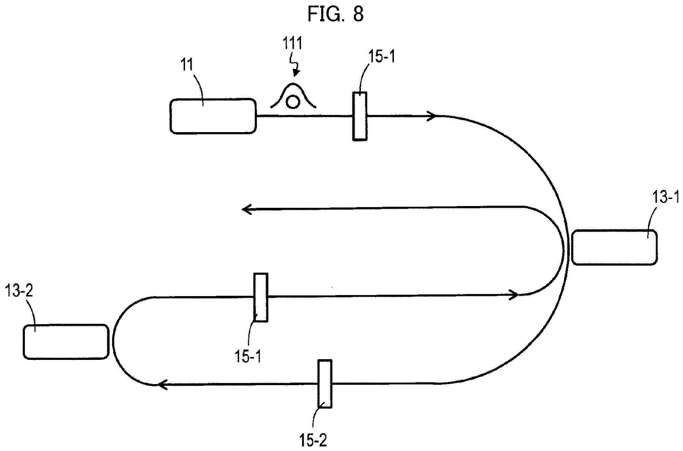

In operation example 1 of Embodiment 2, distributed quantum computing is carried out by operating the optical switch 24 so as to (a) optically connect two quantum computing units 13-$m_1$ and 13-$m_2$ ($m_1$, $m_2 \in \{1, \ldots, M\}$) (a first quantum computing unit and a second quantum computing unit) and (b) cause the photon 111 to enter an optical circuit including these two quantum computing units 13-$m_1$ and 13-$m_2$. In an example indicated in Fig. 8, the quantum computing units 13-1 and 13-2 are selected by operation of the optical switch 24. The following will discuss, with reference to Fig. 8, operation in accordance with operation example 1. First, as discussed in Embodiment 1, $x_1$ selected atom(s) $sa_1$ selected from among a plurality of atoms 132-1 trapped to the quantum computing unit 13-1 and $x_2$ selected atom(s) $sa_2$ selected from among a plurality of atoms 132-2 trapped to the quantum computing unit 13-2 are irradiated with light-shift light, so as to be coupled to respective resonators. The number of qubits used for the distributed quantum computing is $x_1 + x_2$. Here, $x_1$ and $x_2$ are defined as $x_1 \geq 1$ and $x_2 \geq 1$. Alternatively, $x_1$ and $x_2$ may be defined as $x_1 \geq 1$ and $x_2 \geq 2$, $x_1 \geq 2$ and $x_2 \geq 1$, or $x_1 \geq 2$ and $x_2 \geq 2$. In a case where the distributed quantum computing is carried out with use of the pluralities of atoms trapped to the quantum computing units 13-1 and 13-2, $x_1$ and $x_2$ are defined as $x_1 \geq 2$ and $x_2 \geq 2$ (step S20). In this state, the following series of operations are carried out.

(1) A photon 111 in a given state (e.g., horizontal polarization |h>) is generated by the single photon source 11, and the photon 111 thus generated is emitted from the end portion 121a-0 (step S11).
(2) The photon 111 emitted from the single photon source 11 in step S11 is caused to enter a half-wave plate 15-1, so that the state of the photon 111 is rotated by $\pi/2$ and the photon 111 is emitted therefrom (step S12).
(3) The photon emitted from the half-wave plate 15-1 in step S12 is caused to enter the end portion 121a-1 of the quantum computing unit 13-1 (step S13).
(4) The photon emitted from the end portion 121a-1 of the quantum computing unit 13-1 in response to the operation in step S13 is caused to enter the half-wave plate 15-2, so that the state of the photon is rotated by $\pi/2$ and the photon is emitted therefrom (step S24).
(5) The photon emitted from the half-wave plate 15-2 in step S24 is caused to enter the end portion 121a-2 of the quantum computing unit 13-2 (step S25).
(6) The photon emitted from the end portion 121a-2 of the quantum computing unit 13-2 in response to the operation in step S25 is caused to enter the half-wave plate 15-1, so that the state of the photon is rotated by $\pi/2$ and the photon is emitted therefrom (step S26).
(7) The photon emitted from the half-wave plate 15-1 in step S26 is caused to enter the end portion 121a-1 of the quantum computing unit 13-1 again (step S27). In response to the operation in step S27, the photon is emitted from the end portion 121a-1 of the quantum computing unit 13-1.

The states of the selected atoms $sa_i$ and $sa_2$ having been subjected to the above-described operations in steps S11 to S13 and S24 to S27 are respectively the ones obtained by causing the CPF gate (in a case of $x_1 + x_2 = 2$) or the Toffoli gate (in a case of $x_1 + x_2 \geq 3$) of $x_1 + x_2$ bits to act on the states of the selected atoms $sa_i$ and $sa_2$ before these operations are carried out thereon. The state of the photon emitted from the single photon source 11 remains unchanged from the state before the operations.

<Operation Example 2>

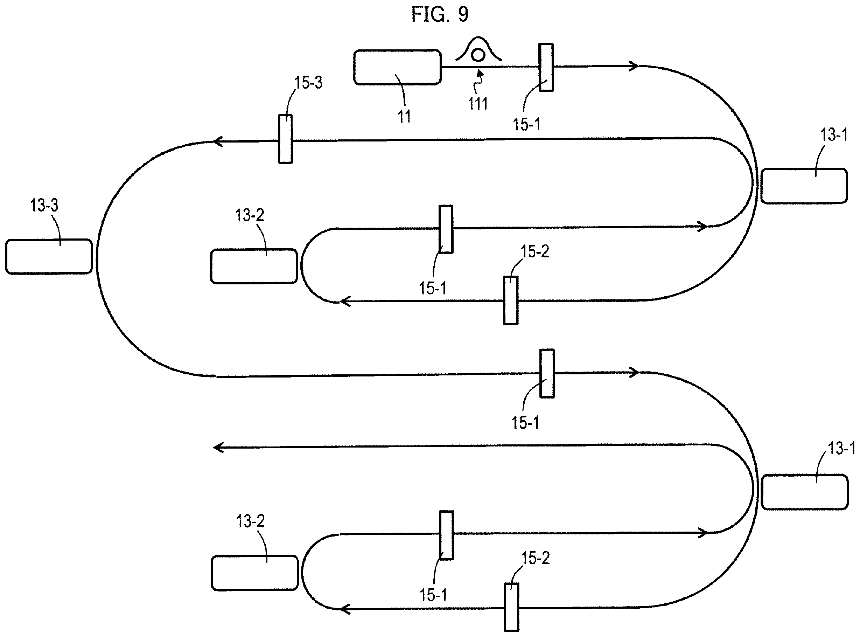

In operation example 2 of Embodiment 2, distributed quantum computing is carried out by operating the optical switch 24 so as to (a) optically connect three quantum computing units 13-$m_1$, 13-$m_2$, and 13-ms ($m_1$, $m_2$, $m_3 \in \{1, \ldots, M\}$) (a first quantum computing unit, a second quantum computing unit, and a third quantum computing unit) and (b) cause the photon 111 to enter an optical circuit including these three quantum computing units 13-$m_1$, 13-$m_2$, and 13-ms. In an example indicated in Fig. 9, the quantum computing units 13-1, 13-2, and 13-3 are selected in response to operation of the optical switch 24. The following will discuss, with reference to Fig. 9, operation in accordance with operation example 2.

First, as discussed in Embodiment 1, $x_1$ selected atom(s) $sa_i$ selected from among a plurality of atoms 132-1 trapped to the quantum computing unit 13-1, $x_2$ selected atom(s) $sa_2$ selected from among a plurality of atoms 132-2 trapped to the quantum computing unit 13-2, and $x_3$ selected atom(s) sas selected from among a plurality of atoms 132-3 trapped to the quantum computing unit 13-3 are irradiated with light-shift light, so as to be coupled to respective resonators. The number of qubits used for the distributed quantum computing is $x_1 + x_2 + x_3$. Here, $x_1$, $x_2$, and $x_3$ are defined as $x_1 \geq 1$, $x_2 \geq 1$, $x_3 \geq 1$. Alternatively, any of $x_1$, $x_2$, and $x_3$ may be not less than 2, or $x_1$, $x_2$, and $x_3$ may be defined as $x_1 \geq 2$, $x_2 \geq 2$, $x_3 \geq 2$ (step S20'). In this state, the following series of operations are carried out.

(0) First, the operations in steps S11 to S13 and S24 to S27 in operation example 1 are carried out. Note, however, that, in steps S12, S24, and S26, the half-wave plate 15-1 or 15-2 rotates the state of the photon 111 by $\pi/4$, rather than by $\pi/2$. In response to the operation in step S27, the photon is emitted from the end portion 121a-1 of the quantum computing unit 13-1. The photon emitted in step S27 is caused to enter the half-wave plate 15-3, so that the state of the photon is rotated by $\pi/4$ and the photon is emitted therefrom (step S28).

(1) The photon emitted from the half-wave plate 15-3 in step S28 is caused to enter the end portion 121a-3 of the quantum computing unit 13-3 (step S29).

(2) The photon emitted from the end portion 121a-3 of the quantum computing unit 13-3 in response to the operation in step S29 is caused to enter the half-wave plate 15-1, so that the state of the photon is rotated by $\pi/4$ and the photon is emitted therefrom (step S12').

(3) The photon emitted from the half-wave plate 15-1 in step S12' is caused to enter the end portion 121a-1 of the quantum computing unit 13-1 (step S13').

(4) The photon emitted from the end portion 121a-1 of the quantum computing unit 13-1 in response to the operation in step S13' is caused to enter the half-wave plate 15-2, so that the state of the photon is rotated by $\pi/4$ and the photon is emitted therefrom (step S24').

(5) The photon emitted from the half-wave plate 15-2 in step S24' is caused to enter the end portion 121a-2 of the quantum computing unit 13-2 (step S25').

(6) The photon emitted from the end portion 121a-2 of the quantum computing unit 13-2 in response to the operation in step S25' is caused to enter the half-wave plate 15-1, so that the state of the photon is rotated by $\pi/4$ and the photon is emitted therefrom (step S26').

(7) The photon emitted from the half-wave plate 15-1 in step S26' is caused to enter the end portion 121a-1 of the quantum computing unit 13-1 again (step S27'). In response to the operation in step S27', the photon is emitted from the end portion 121a-1 of the quantum computing unit 13-1.

The states of the selected atoms $sa_1$, $sa_2$, and $sa_3$ having been subjected to the above-described operations in steps S11 to S13, S24 to S29, S12', S13', and S24' to S27 are respectively the ones obtained by causing the Toffoli gate of $x_1 + x_2 + x_3$ bits to act on the states of the selected atoms $sa_1$, $sa_2$, and sas before these operations are carried out thereon. The state of the photon emitted from the single photon source 11 remains unchanged from the state before the operations.

Embodiment 3

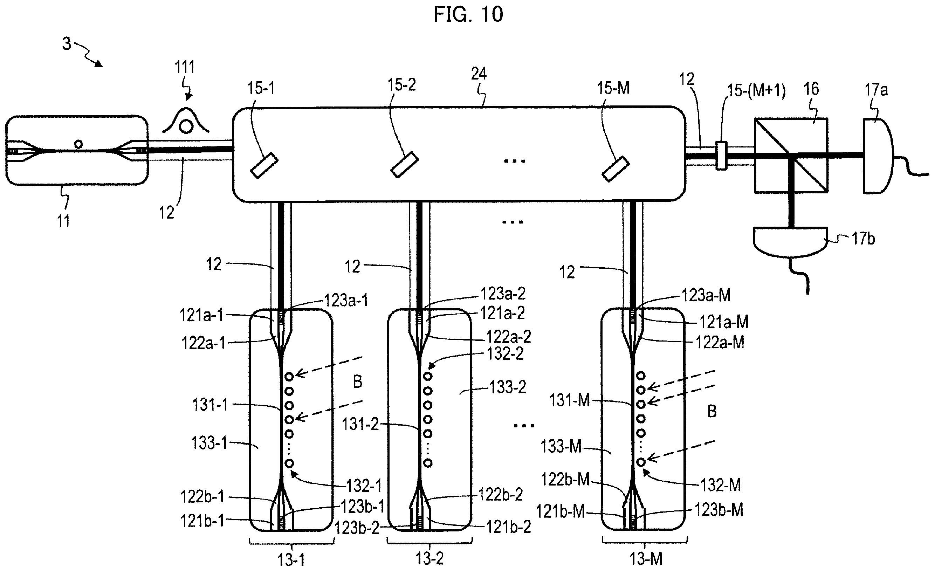

Next, Embodiment 3 of the present invention will be discussed. As shown in an example indicated in Fig. 10, a quantum computing device 3 in accordance with Embodiment 3 includes a single photon source 11, M quantum computing units 13-1 to 13-M, an optical switch 24, half-wave plates 15-1 to 15-(M+1), a polarization state measurement instrument 16, and an optical fiber 12.

<Operation of Quantum Computing Device 3>

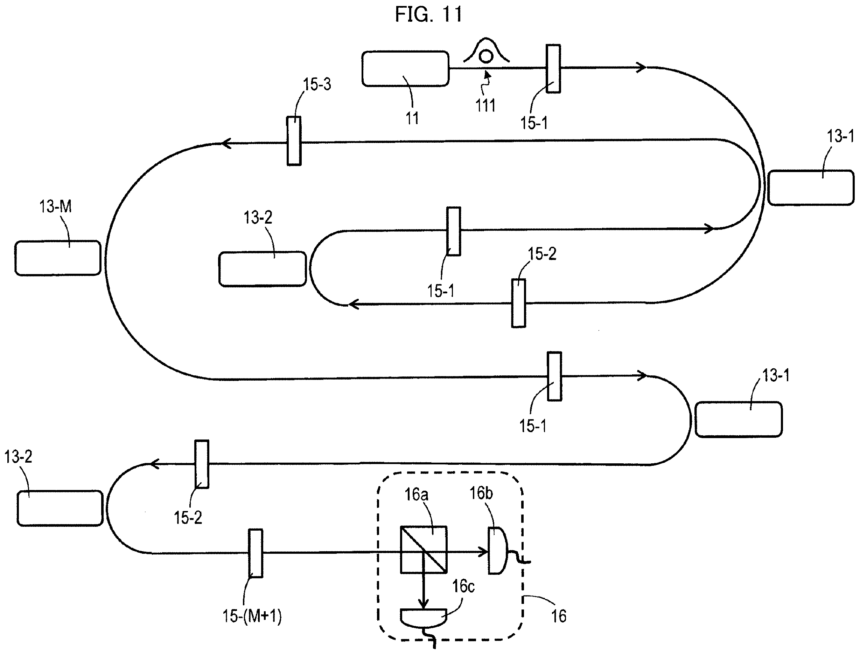

In Embodiment 3, distributed quantum computing is carried out by operating the optical switch 24 with a non-illustrated control part so as to (a) optically connect three quantum computing units 13-$m_1$, 13-$m_2$, and 13-$m_M$ ($m_1$, $m_2$, $m_M \in \{1, \dots, M\}$) (a first quantum computing unit, a second quantum computing unit, and a third quantum computing unit) and (b) cause a photon 111 to enter an optical circuit including these three quantum computing units 13-mi, 13-$m_2$, and 13-mm. In an example indicated in Fig. 11, the quantum computing units 13-1, 13-2, and 13-M are selected in response to operation of the optical switch 24. The following will discuss, with reference to Fig. 11, an example of operation in accordance with Embodiment 3.

First, as discussed in Embodiments 1 and 2, $x_1$ selected atom(s) $sa_1$, $x_2$ selected atom(s) $sa_2$, and $x_M$ selected atom(s) $sa_M$ are irradiated with light-shift light, so as to be coupled to respective resonators. In this state, the following series of operations are carried out.

(0) First, the above-described operations in steps S11 to S13, S24 to S29, S12', and S13' are carried out. Note, however, that, in steps S12, S24, and S26, the half-wave plate 15-1 or 15-2 rotates the state of the photon 111 by $\pi/4$, rather than by $\pi/2$. Further, in place of the quantum computing unit 13-3, the quantum computing unit 13-M is used.

(4) The photon emitted from the end portion 121a-1 of the quantum computing unit 13-1 in response to the operation in step S13' is caused to enter the half-wave plate 15-2, so that the state of the photon is rotated by $\pi/4$ and the photon is emitted therefrom (step S34).

(5) The photon emitted from the half-wave plate 15-2 in step S34 is caused to enter the end portion 121a-2 of the quantum computing unit 13-2 (step S35).

(6) The photon emitted from the end portion 121a-2 of the quantum computing unit 13-2 in response to the operation in step S35 is caused to enter the half-wave plate 15-(M+1), so that the state of the photon is rotated by $\pi/4$ and the photon is emitted therefrom (step S36).

(7) The photon emitted from the half-wave plate 15-(M+1) in step S36 is caused to enter the polarization state measurement instrument 16, and a polarization state of the photon is measured. Consequently, the state of the photon is contracted to a certain polarization state. States of the selected atoms $sa_1$, $sa_2$, and sam entangled with the state of the photon are also contracted in accordance with a result of measurement of the polarization state of the photon. Further, as discussed in Embodiment 1, rotating operation is carried out on the selected atom(s) sai trapped to the quantum computing unit 13-1, in accordance with a result of measurement of the polarization state of the photon (step S37).

The states of the selected atoms $sa_1$, $sa_2$, and sam having been subjected to the above-described operations in steps S11 to S13, S24 to S29, S12', S13', and S34 to S37 are respectively the ones obtained by causing the Toffoli gate of $x_1 + x_2 + x_M$ bits to act on the states of the selected atoms $sa_1$, $sa_2$, and $sa_M$ before these operations are carried out thereon.

Embodiment 4

Next, Embodiment 4 of the present invention will be discussed.

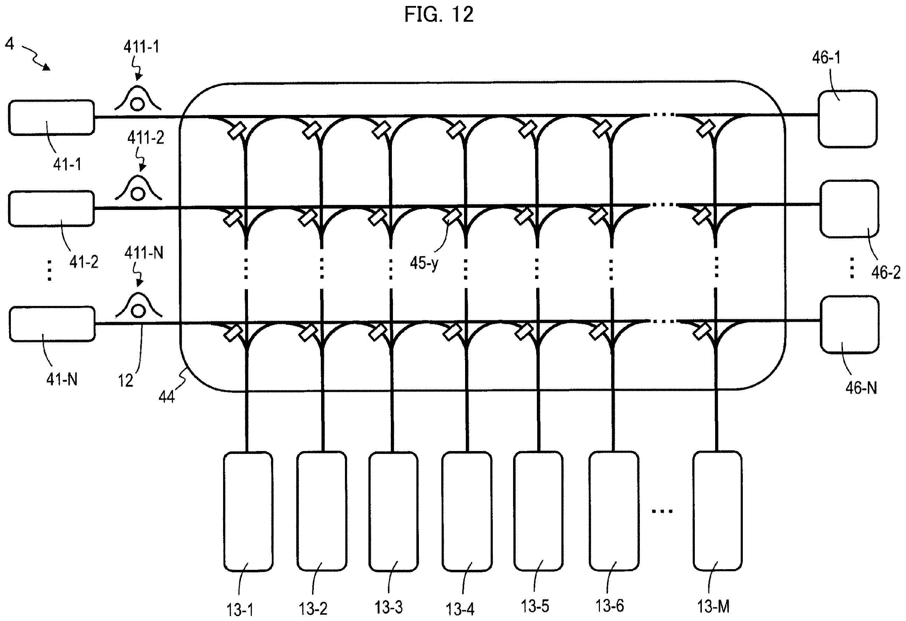

As shown in an example indicated in Fig. 12, a quantum computing device 4 in accordance with Embodiment 4 includes N single photon sources 41-1 to 41-N (single photon sources S(1), ... , S(N)), M quantum computing units 13-1 to 13-M (quantum computing units U(1), ... , U(M)), an optical switch 44, half-wave plates 45-1 to 45-Y, polarization state measurement instruments 46-1 to 46-N, and an optical fiber 12. Note that N is an integer of not less than 2, M is an integer of not less than 2N, and Y is an integer of not less than 1. A configuration of the quantum computing unit 43-m (m = 1, ... , M) is identical to that of the quantum computing unit 13-m in accordance with Embodiment 1. A configuration of the single photon source 41-j (j = 1, ... , N) is identical to that of the single photon source 11 in accordance of Embodiment 1. A configuration of the polarization state measurement instrument 46-j (j = 1, ... , N) is also identical to that of the polarization state measurement instrument 16 in accordance with Embodiment 1. A configuration of the half-wave plate 45-y (y = 1, ... , Y) is also identical to that of any of the half-wave plates 15-i' (i' $\in$ {1, ... , M+1}) in accordance with Embodiments 1 to 3. The optical switch 44 is a device that emits, to a selected optical path, a photon entering thereto. Propagation of the photon to the optical switch 44 and propagation of the photon from the optical switch 44 to the quantum computing unit 13-m are carried out via the optical fiber 12.

<Operation of Quantum Computing Device 4>

In Embodiment 4, the optical switch 44 optically connects each single photon source 41-j (j = 1, ... , N) and a set of two selected quantum computing units 13-$\alpha_1$(j) and 13-$\alpha_2$(j). Note that $\alpha_1(j), \alpha_2(j) \in$ {1, ... , M} and $\alpha_1(j) \neq \alpha_2(j)$. Each single photon source 41-j emits a photon 411-j (single photon). For j = 1, ... , N, the photon emitted from each single photon source 41-j is caused to enter an optical circuit C(j) including the set of the two quantum computing units 13-$\alpha_1$(j) and 13-$\alpha_2$(j). Consequently, optical circuits C(1), ... , C(N) carry out distributed quantum computing in parallel. Each optical circuit C(j) may include, in addition to the set of the two quantum computing units 13-$\alpha_1$(j) and 13-$\alpha_2$(j), one more quantum computing unit 13-$\alpha_3$(j) ($\alpha_3(j) \in$ {1, ... , M}, $\alpha_1(j) \neq \alpha_2(j) \neq \alpha_3(j)$), at least one half-wave plate 45-y, and/or a polarization state measurement instrument 46-j. There is no limitation on the optical circuit C(j). Examples of the optical circuit C(j) can encompass the optical circuits indicated in Embodiments 1 to 3 (Figs. 6, 8, 9, and 11). A specific example of the distributed quantum computing to be carried out by each optical circuit C(j) is indicated in Embodiments 1 to 3.

Other Variations

Note that the present invention is not limited to any of the foregoing embodiments. For example, in the example indicated in the foregoing embodiment, the cores of the end portions 121a-m and 121b-m of the quantum computing unit 13-m are respectively provided with the fiber Bragg gratings 123a-m and 123b-m. Alternatively, in place of the configuration in which the core of the end portion 121a-m is provided with the fiber Bragg grating 123a-m, the tapered portion 122a-m or the optical nanofiber 131-m may be provided with a fiber Bragg grating. Similarly, in place of the configuration in which the core of the end portion 121b-m is provided with the fiber Bragg grating 123b-m, the tapered portion 122b-m or the optical nanofiber 131-m may be provided with a fiber Bragg grating. Note, however, that all the atoms 132-m are desirably arranged along the optical nanofiber area between the two fiber Bragg gratings provided to the quantum computing unit 13-m. That is, it is desirable that a strength of an evanescent field at a location of all the atoms 132-m relative to the photon propagating through the optical nanofiber 131-m satisfy the above-discussed condition.

In the example indicated in the foregoing embodiment, the cores of the end portions 121a-0 and 121b-0 of the single photon source 11 are respectively provided with fiber Bragg gratings 123a-0 and 123b-0. Alternatively, in place of the configuration in which the core of the end portion 121a-0 is provided with the fiber Bragg grating 123a-0, the tapered portion 122a-0 or the optical nanofiber 111 may be provided with a fiber Bragg grating. Similarly, in place of the configuration in which the core of the end portion 12 1b-0 is provided with the fiber Bragg grating 123b-0, the tapered portion 122b-0 or the optical nanofiber 111 may be provided with a fiber Bragg grating. Note, however, that the atoms 112 are desirably arranged along the optical nanofiber area between the two fiber Bragg gratings provided to the single photon source 11. That is, it is desirable that a strength of an evanescent field at a location of all the atoms 112 relative to the photon propagating through the optical nanofiber 111 satisfy the above-discussed condition.

In the foregoing embodiments, spaces surrounding the optical nanofibers 111, 131-m as well as the tapered portions 122a-0, 122b-0 and 122a-m, 122b-m are in a vacuum state. However, the spaces surrounding the optical nanofibers 111, 131-m as well as the tapered portions 122a-0, 122b-0 and 122a-m, 122b-m may not be vacuum, and only need to be spaces having a smaller refractive index than those of the claddings of the optical nanofibers 111, 131-m as well as the tapered portions 122a-0, 122b-0 and 122a-m, 122b-m. For example, these spaces may be filled with a gas such as atmosphere or nitrogen or a liquid such as water or alcohol. In the foregoing embodiment, the atoms 132-m are used as "quantum systems each functioning as a qubit interacting with a state of a photon" in the quantum computing unit 13-m. However, the atoms 132-m may be replaced with quantum systems in solids which quantum systems exhibit a similar optical response to that of the atoms 132-m. Examples of such quantum systems encompass artificial atoms (e.g., quantum dots) and Farbe centers (F centers) in crystals (e.g., nitrogen-vacancy centers (NV centers) in diamond). (For example, see Reference Literatures 4 and 5, etc.) Similarly, in the foregoing embodiment, the atom 112 is used as a "quantum system having a plurality of levels" in the single photon source 11. However, the atom 112 may be replaced with a quantum system in a solid which quantum system exhibits a similar optical response to that of the atom 112. Examples of such a quantum system encompass an artificial atom (e.g., a quantum dot) and an F center in a crystal (e.g., an NV center in diamond). In such a case, a solid having the quantum system may be fixed to the optical nanofiber 111 or 13 1-m.

Reference Literature 4: Ramachandrarao Yalla, Fam Le Kien, M Morinaga, K Hakuta, "Efficient Channeling of Fluorescence Photons From Single Quantum Dots Into Guided Modes of Optical Nanofiber," Phys Rev Lett. 2012 Aug 10; 109(6):063602. doi: 10.1103/PhysRevLett.109.063602. Epub 2012 Aug 8.

Reference Literature 5: Masazumi Fujiwara1, Kazuma Yoshida1, Tetsuya Noda, Hideaki Takashima, Andreas W Schell, Norikazu Mizuochi and Shigeki Takeuchi, "Manipulation of single nanodiamonds to ultrathin fiber-taper nanofibers and control of NV-spin states toward fiber-integrated λ-systems," Published 7 October 2016, Nanotechnology, Volume 27, Number 45.

It is possible to fix such a solid to the optical nanofiber 111 or 131-m by, for example, a van der Waals force. In the foregoing embodiments, the A-type three-level atom is used as an example. Alternatively, a three-level atom of another type may be used. Further alternatively, an atom having four or more levels may be used.

There is no limitation on the number of half-wave plates, the number of single photon sources, and the number of polarization state measurement instruments. These numbers may be set as appropriate in accordance with distributed quantum computing to be realized. Needless to say, other parts can be altered within the technical scope of the present invention.

Summery

The features of the embodiments and variations thereof are summarized as below.

As discussed above, the quantum computing unit 13-m for quantum computing in accordance with each embodiment includes: the optical nanofiber 131-m optically connected, via the tapered portion 121a-m, to the optical fiber 12 through which a photon entering thereto is propagated; and the plurality of atoms $a_1$-m, ... , $a_{K(m)}$-m arranged outside the optical nanofiber 131-m and arrayed at intervals along a longitudinal direction of the optical nanofiber. In theory, configuring the resonator with use of the optical nanofiber 131-m in this manner makes it possible to increase, as much as desired, a length of the region where the atoms $a_1$-m, ... , $a_{K(m)}$-m are trapped, while a small mode area is maintained. Further, the optical nanofiber 131-m is optically connected, via the tapered portion 122a-m, to the end portion 121a-m of the optical fiber 12 through which a photon entering thereto is propagated. This can reduce a total loss of the resonator. Therefore, it is possible to trap many atoms $a_1$-m, ... , $a_{K(m)}$-m while the coupling rates g between the resonator and the individual atoms $a_1$-m, ... , $a_{K(m)}$-m are kept sufficiently higher relative to an amplitude decay rate $\kappa$ and a decay rate $\gamma$ (i.e., while a cooperativity parameter C is kept higher than $TH_1$ (first threshold)). Moreover, the quantum computing units 13-m configured in this manner can be optically connected via the optical fiber 12 with a small loss. Thus, by coupling the plurality of quantum computing units 13-m, it is possible to configure a deterministic quantum circuit for distributed quantum computing.

Further, as discussed above, it is desirable that (i) the strength of the evanescent field at the location of the plurality of atoms $a_1$-m, ... , $a_{K(m)}$-m relative to the photon propagating through the optical nanofiber 131-m be not less than the threshold $th_2$ (second threshold) and (ii) van der Waals forces between the plurality of atoms $a_1$-m, ... , $a_{K(m)}$-m and the optical nanofiber 131-m be not more than a threshold ths (third threshold). In this aspect, thanks to adoption of the optical nanofiber 131-m, it is possible to arrange the plurality of atoms $a_1$-m, ... , $a_{K(m)}$-m in a single row along the longitudinal direction of the optical nanofiber 131-m under these conditions, while the coupling rate g is kept sufficiently higher relative to the amplitude decay rate $\kappa$ and the decay rate $\gamma$. By arranging the atoms $a_1$-m, ... , $a_{K(m)}$-m in a single row, it is easy to emit control light to the individual atoms.

The above-discussed features makes it possible to carry out distributed quantum computing by connecting a plurality of quantum computing units having a plurality of atoms trapped thereto. For example, distributed quantum computing is carried out by (a) optically connecting a first quantum computing unit and a second quantum computing unit selected from among a plurality of quantum computing units and (b) causing a photon to enter an optical circuit including the first quantum computing unit and the second quantum computing unit.

For example, as shown in the examples indicated in Figs. 9 and 11, distributed quantum computing involving use of three quantum computing units 13-1, 13-2, and 13-3 or 13-M (first quantum computing unit, second quantum computing unit, and third quantum computing unit) each having a plurality of atoms trapped thereto is also possible.

For another example, as shown in the example indicated in Fig. 9, distributed quantum computing can be carried out by causing a photon to enter the half-wave plate 15-1 (first half-wave plate), causing the photon emitted from the half-wave plate 15-1 to enter the quantum computing unit 13-1 (first quantum computing unit), causing the photon emitted from the quantum computing unit 13-1 to enter the half-wave plate 15-2 (second half-wave plate), causing the photon emitted from the half-wave plate 15-2 (second half-wave plate) to enter the quantum computing unit 13-2 (second quantum computing unit), causing the photon emitted from the quantum computing unit 13-2 to enter the half-wave plate 15-1 (third half-wave plate), causing the photon emitted from the half-wave plate 15-1 (third half-wave plate) to enter the quantum computing unit 13-1, causing the photon emitted from the quantum computing unit 13-1 to enter the half-wave plate 15-3 (fourth half-wave plate), causing the photon emitted from the half-wave plate 15-3 (fourth half-wave plate) to enter the quantum computing unit 13-3 (third quantum computing unit), causing the photon emitted from the quantum computing unit 13-3 to enter the half-wave plate 15-1 (fifth half-wave plate), causing the photon emitted from the half-wave plate 15-1 (fifth half-wave plate) to enter the quantum computing unit 13-1, causing the photon emitted from the quantum computing unit 13-1 to enter the half-wave plate 15-2 (sixth half-wave plate), causing the photon emitted from the half-wave plate 15-2 (sixth half-wave plate) to enter the quantum computing unit 13-2, causing the photon emitted from the quantum computing unit 13-2 to enter the half-wave plate 15-1 (seventh half-wave plate), and causing the photon emitted from the half-wave plate 15-1 (seventh half-wave plate) to enter the quantum computing unit 13-1. Note that each of the half-wave plates 15-1, 15-2, and 15-3 (first to seventh half-wave plates) rotates, by $\pi/4$, a state of a photon entering thereto and emits the photon. In the example indicated in Fig. 9, the half-wave plate 15-1 is used as each of the first, third, fifth, and seventh half-wave plates, the half-wave plate 15-2 is used as each of the second and sixth half-wave plates, and the half-wave plate 15-3 is used as the fourth half-wave plate. However, the present invention is not limited to this. Alternatively, for example, a single half-wave plate may be used as the first to seventh half-wave plates, seven half-wave plates may be used as the first to seventh half-wave plates, or any number of half-wave plates may be used as the first to seventh half-wave plates. That is, the first to seventh half-wave plates may be or may not be the same half-wave plate, or only a part of the first to seventh half-wave plates may be the same half-wave plate.

For another example, as shown in the example indicated in Fig. 11, distributed quantum computing can be carried out by causing a photon to enter the half-wave plate 15-1 (first half-wave plate), causing the photon emitted from the half-wave plate 15-1 to enter the quantum computing unit 13-1 (first quantum computing unit), causing the photon emitted from the quantum computing unit 13-1 to enter the half-wave plate 15-2 (second half-wave plate), causing the photon emitted from the half-wave plate 15-2 (second half-wave plate) to enter the quantum computing unit 13-2 (second quantum computing unit), causing the photon emitted from the quantum computing unit 13-2 to enter the half-wave plate 15-1 (third half-wave plate), causing the photon emitted from the half-wave plate 15-1 (third half-wave plate) to enter the quantum computing unit 13-1, causing the photon emitted from the quantum computing unit 13-1 to enter the half-wave plate 15-3 (fourth half-wave plate), causing the photon emitted from the half-wave plate 15-3 (fourth half-wave plate) to enter the quantum computing unit 13-M (third quantum computing unit), causing the photon emitted from the quantum computing unit 13-M to enter the half-wave plate 15-1 (fifth half-wave plate), causing the photon emitted from the half-wave plate 15-1 (fifth half-wave plate) to enter the quantum computing unit 13-1, causing the photon emitted from the quantum computing unit 13-1 to enter the half-wave plate 15-M (sixth half-wave plate), causing the photon emitted from the half-wave plate 15-M (sixth half-wave plate) to enter the quantum computing unit 13-2, causing the photon emitted from the quantum computing unit 13-2 to enter the half-wave plate 15-(M+1) (seventh half-wave plate),

measuring a quantum state of the photon emitted from the half-wave plate 15-(M+1) (seventh half-wave plate), and carrying out rotating operation on the atoms in the quantum computing unit 13-1 in accordance with a result of the measurement. Note that each of the half-wave plates 15-1, 15-2, 15-3, and 15-(M+1) (first to seventh half-wave plates) rotates, by $\pi/4$, a state of a photon entering thereto and emits the photon. In the example indicated in Fig. 11, the half-wave plate 15-1 is used as each of the first, third, and fifth half-wave plates, the half-wave plate 15-2 is used as each of the second and sixth half-wave plates, the half-wave plate 15-3 is used as the fourth half-wave plate, and the half-wave plate 15-(M+1) is used as the seventh half-wave plate. However, the present invention is not limited to this. Alternatively, for example, a single half-wave plate may be used as the first to seventh half-wave plates, seven half-wave plates may be used as the first to seventh half-wave plates, or any number of half-wave plates may be used as the first to seventh half-wave plates. That is, the first to seventh half-wave plates may be or may not be the same half-wave plate, or only a part of the first to seventh half-wave plates may be the same half-wave plate.

Further, as discussed in Embodiment 4, the quantum computing device 4 includes: N single photon sources 41-1 to 41-N (single photon sources S(1), ... , S(N)); M quantum computing units 13-1 to 13-M (quantum computing units U(1), ... , U(M)); and an optical switch 44 optically connecting a single photon source 41-j and a set of two quantum computing units 13-$\alpha_1$(j) and 13-$\alpha_2$(j) (U($\alpha_1$(j)) and U($\alpha_2$(j))), and can cause the optical circuits C(1), ... , C(N) to carry out distributed quantum computing in parallel by causing, for j = 1, ... , N, a photon emitted from the single photon source 41-j to enter an optical circuit C(j) including the set of the two 13-$\alpha_1$(j) and 13-$\alpha_2$(j).

In each of the embodiments and variations thereof, the optical fiber or the optical nanofiber is provided with a fiber Bragg grating having a reflection bandwidth including a wavelength of the photon, and the fiber Bragg grating functions as a mirror that reflects a photon. With this, it is possible to achieve a mirror merely by processing the optical fiber or the optical nanofiber.

Further, each of the single photon sources 11 and 41-1 to 41-N in the embodiments includes: the optical nanofiber 111 optically connected, via the tapered portion 122a-0, to the optical fiber through which a photon is propagated; and the atoms 112 arranged outside the optical nanofiber 111. Thanks to the configuration in which the optical nanofiber 111 is optically connected to the optical fiber via the tapered portion 122a-0, a generated single photon can be efficiently supplied to the optical fiber.

Further, as discussed above, the atoms may be replaced with quantum systems such as artificial atoms (e.g., quantum dots) or F centers in crystals (e.g., NV centers in diamond). That is, the quantum computing unit may include: an optical nanofiber optically connected, via a tapered portion, to an optical fiber through which a photon entering thereto is propagated; and a plurality of quantum systems arranged outside the optical nanofiber and arrayed at intervals along a longitudinal direction of the optical nanofiber. Note that at least any one of the quantum systems functions as a quantum system functioning as a qubit interacting with a state of a photon. Preferably, all the quantum systems interact with a state of the photon. Further, the single photon source may include: an optical nanofiber optically connected, via a tapered portion, to an optical fiber through which a photon is propagated; and a quantum system arranged outside the optical nanofiber, the quantum system having a plurality of levels. As discussed above, the quantum systems include at least one selected from the group consisting of atoms, artificial atoms, quantum dots, and F centers in crystals (e.g., NV centers), for example.

Reference Signs List

    1 to 4: quantum computing device
    13-m: quantum computing unit
    11, 41-j: single photon source

**Claims**

1.    A quantum computing unit for quantum computing, comprising:

    an optical nanofiber optically connected, via a tapered portion, to an optical fiber through which a photon entering thereto is propagated; and
    a plurality of quantum systems arranged outside the optical nanofiber and arrayed at intervals along a longitudinal direction of the optical nanofiber,
    at least any one of the plurality of quantum systems functioning as a qubit interacting with a state of the photon.

2.    The quantum computing unit as set forth in claim 1, wherein:

the optical fiber or the optical nanofiber is provided with a fiber Bragg grating having a reflection bandwidth including a wavelength of the photon; and

the fiber Bragg grating functions as a mirror that reflects a photon.

3. The quantum computing unit as set forth in claim 1 or 2, wherein:
the quantum computing unit has a cooperativity parameter that is higher than a first threshold.

4. The quantum computing unit as set forth in any one of claims 1 to 3, wherein:
a strength of an evanescent field at a location of the plurality of quantum systems relative to the photon propagating through the optical nanofiber is not less than a second threshold.

5. The quantum computing unit as set forth in any one of claims 1 to 4, wherein:
the plurality of quantum systems are arranged in a single row along the longitudinal direction of the optical nanofiber.

6. The quantum computing unit as set forth in any one of claims 1 to 5, wherein:
each of the plurality of quantum systems functions as a qubit interacting with a state of the photon.

7. The quantum computing unit as set forth in claim 6, wherein:
among the plurality of quantum systems, a quantum system selected by light-shift light functions as a qubit interacting with the state of the photon.

8. The quantum computing unit as set forth in any one of claims 1 to 7, wherein:
the plurality of quantum systems include at least any one selected from the group consisting of atoms, artificial atoms, quantum dots, and nitrogen-vacancy centers.

9. A quantum computing device, comprising:

one or more quantum computing units optically connected to each other, the one or more quantum computing units being configured to carry out distributed quantum computing,
each of the one or more quantum computing units including

an optical nanofiber optically connected, via a tapered portion, to an optical fiber through which a photon entering thereto is propagated; and
a plurality of quantum systems arranged outside the optical nanofiber and arrayed at intervals along a longitudinal direction of the optical nanofiber,

at least any one of the plurality of quantum systems functioning as a qubit interacting with a state of the photon.

10. The quantum computing device as set forth in claim 9, wherein:
the quantum computing device carries out distributed quantum computing by (a) optically connecting a first quantum computing unit and a second quantum computing unit selected from among the plurality of quantum computing units and (b) causing a photon to enter an optical circuit including the first quantum computing unit and the second quantum computing unit.

11. The quantum computing device as set forth in claim 9, wherein:

the one or more quantum computing units comprise a first quantum computing unit, a second quantum computing unit, and a third quantum computing unit; and
the quantum computing device carries out distributed quantum computing by causing a photon to enter a first half-wave plate, causing the photon emitted from the first half-wave plate to enter the first quantum computing unit, causing the photon emitted from the first quantum computing unit to enter a second half-wave plate, causing the photon emitted from the second half-wave plate to enter the second quantum computing unit, causing the photon emitted from the second quantum computing unit to enter a third half-wave plate, causing the photon emitted from the third half-wave plate to enter the first quantum computing unit, causing the photon emitted from the first quantum computing unit to enter a fourth half-wave plate, causing the photon emitted from the fourth half-wave plate to enter the third quantum computing unit, causing the photon emitted from the third quantum computing unit to enter a fifth half-wave plate, causing the photon emitted from the fifth half-wave plate to enter the first quantum computing unit, causing the photon emitted from the first quantum computing unit to enter a sixth half-wave plate, causing the photon emitted from the sixth half-wave plate to enter the second quantum computing unit, causing the photon emitted from the second quantum computing unit to enter a seventh half-wave plate, and causing the photon emitted from the seventh half-wave plate to enter the first quantum computing unit.

12. The quantum computing device as set forth in claim 9, wherein:

the one or more quantum computing units comprise a first quantum computing unit, a second quantum computing unit, and a third quantum computing unit; and

the quantum computing device carries out distributed quantum computing by causing a photon to enter a first half-wave plate, causing the photon emitted from the first half-wave plate to enter the first quantum computing unit, causing the photon emitted from the first quantum computing unit to enter a second half-wave plate, causing the photon emitted from the second half-wave plate to enter the second quantum computing unit, causing the photon emitted from the second quantum computing unit to enter a third half-wave plate, causing the photon emitted from the third half-wave plate to enter the first quantum computing unit, causing the photon emitted from the first quantum computing unit to enter a fourth half-wave plate, causing the photon emitted from the fourth half-wave plate to enter the third quantum computing unit, causing the photon emitted from the third quantum computing unit to enter a fifth half-wave plate, causing the photon emitted from the fifth half-wave plate to enter the first quantum computing unit, causing the photon emitted from the first quantum computing unit to enter a sixth half-wave plate, causing the photon emitted from the sixth half-wave plate to enter the second quantum computing unit, causing the photon emitted from the second quantum computing unit to enter a seventh half-wave plate, measuring a quantum state of the photon emitted from the seventh half-wave plate, and carrying out rotating operation on the plurality of quantum systems in the first quantum computing unit in accordance with a result of the measurement.

13. The quantum computing device as set forth in claim 11 or 12, wherein:
each of the first to seventh half-wave plates is configured to rotate, by $\pi/4$, a state of the photon entering thereto and to emit the photon.

14. The quantum computing device as set forth in claim 9, further comprising:

N single photon sources S(1), ... , S(N);
M quantum computing units U(1), ... , U(M) as the one or more quantum computing units;
an optical switch optically connecting each single photon source S(j) and a set of two quantum computing units $U(\alpha_1(j))$ and $U(\alpha_2(j))$, wherein
the quantum computing device causes optical circuits C(1), ... , C(N) to carry out distributed quantum computing in parallel by causing, for j = 1, ... , N, a photon emitted from the single photon source S(j) to enter an optical circuit C(j) including the two quantum computing units $U(\alpha_1(j))$ and $U(\alpha_2(j))$, where j = 1, ... , N, N is an integer of not less than 2, M is an integer of not less than 2N, $\alpha_1(j), \alpha_2(j) \in \{1, ... , M\}$, and $\alpha_1(j) \neq \alpha_2(j)$.

15. A single photon source for quantum computing, comprising:

an optical nanofiber optically connected, via a tapered portion, to an optical fiber through which a photon is propagated; and
a quantum system arranged outside the optical nanofiber, the quantum system having a plurality of levels.

16. The single photon source as set forth in claim 15, wherein:
the quantum system having the plurality of levels emits a single photon upon excited by control light.

17. A quantum computing method involving use of a quantum computing unit that includes (a) an optical nanofiber optically connected to an optical fiber via a tapered portion and (b) a plurality of quantum systems arranged outside the optical nanofiber and arrayed at intervals along a longitudinal direction of the optical nanofiber, the quantum computing method comprising the steps of:

emitting light-shift light to at least any one of the plurality of quantum systems; and
causing a photon to enter the optical fiber.

FIG. 1

FIG. 2

EP 4 181 031 A1

FIG. 3

EP 4 181 031 A1

FIG. 4

FIG. 5

FIG. 5A

FIG. 5B

EP 4 181 031 A1

EP 4 181 031 A1

FIG. 6

FIG. 7

FIG. 8

FIG. 9

FIG. 10

EP 4 181 031 A1

FIG. 11

EP 4 181 031 A1

FIG. 12

## INTERNATIONAL SEARCH REPORT

| | International application No. |
|---|---|
| | **PCT/JP2021/025783** |

**A.    CLASSIFICATION OF SUBJECT MATTER**

*G06N 10/00*(2019.01)i; *B82Y 10/00*(2011.01)i; *G02F 3/00*(2006.01)i
FI:    G06N10/00; G02F3/00; B82Y10/00

According to International Patent Classification (IPC) or to both national classification and IPC

**B.    FIELDS SEARCHED**

Minimum documentation searched (classification system followed by classification symbols)

G06N10/00; B82Y10/00; B82Y20/00; G02F1/00; G02F3/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | 青木隆朗, 量子ネットワークに向けた全ファイバー結合共振器量子電気力学系, 2019年第80回応用物理学会秋季学術講演会［講演予稿集］, 公益社団法人応用物理学会, 04 September 2019, p. 1 (19p-E301-1), ISBN: 978-4-86348-715-4, (AOKI, Takao. The 80th JSAP Autumn Meeting 2019 'Lecture proceedings'. The Japan Society of Applied Physics), non-official translation (Quantum electrodynamic system of all-fiber coupled resonators for quantum networks)<br>    particularly, p. 1, lines 9-15, fig. 1 | 1-2, 5-6, 8-10, 17 |
| A | | 3-4, 7, 11-14 |
| Y | 越野和樹 ほか, 単一光子による決定論的な量子状態スイッチング, 日本物理学会誌［online］, vol. 69, no. 12, 一般社団法人日本物理学会, 2014, p. 870, [retrieved on 16 September 2021], Internet:<URL:http://www.jps.or.jp/books/gakkaishi/2014/12/05/69-12researches1.pdf>, (KOSHINO, Kazuki et al., Deterministic Switching of a Superconducting Qubit by a Single Microwave Photon. Butsuri. The Physical Society of Japan)<br>    particularly, the text and the sidenote | 1-2, 5-6, 8-10, 17 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 September 2021** | **28 September 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

International application No.

**PCT/JP2021/025783**

**C.    DOCUMENTS CONSIDERED TO BE RELEVANT**

| Category* | Citation of document, with indication, where appropriate, of the relevant passages | Relevant to claim No. |
|---|---|---|
| Y | 青木隆朗, スケーラブルな光学的量子計算のためのナノファイバー共振器量子電気力学系, 2018年第79回応用物理学会秋季学術講演会［講演予稿集］, 公益社団法人応用物理学会, 05 September 2018, p. 1 (20p-145-4), ISBN: 978-4-86348-679-9, (AOKI, Takao. The 79th JSAP Autumn Meeting 2018 'Lecture proceedings'. The Japan Society of Applied Physics), non-official translation (Quantum electrodynamic system of nanofiber resonators for scalable optical quantum computation)<br>    particularly, p. 1, lines 5-14, fig. 1 | 15-16 |
| Y | 早坂和弘, 共振器量子電磁力学による決定論的単一光子生成, レーザー研究［online］, vol. 31, no 9, September 2003, pp. 586-591, [retrieved on: 16 September 2021], Internet: <URL:https://www.jstage.jst.go.jp/article/lsj/31/9/31_9_586/_pdf/-char/ja>, (HAYASAKA, Kazuhiro. Deterministic Single-Photon Generation by Cavity QED. The Review of Laser Engineering)<br>    particularly, ［1. はじめに］- ［3. 共振器QEDによる単一光子生成の理論］, non-official translation ('1. Firstly' to '3. Theory of single-photon generation by cavity QED') | 15-16 |
| A | CN 109387934 A (JINAN UNIVERSITY) 26 February 2019 (2019-02-26)<br>    entire text, all drawings | 1-17 |
| A | US 2018/0053551 A1 (YEDA RESEARCH AND DEVELOPMENT CO., LTD.) 22 February 2018 (2018-02-22)<br>    entire text, all drawings | 1-17 |
| A | CN 209070256 U (SHENZHEN UNIVERSITY) 05 July 2019 (2019-07-05)<br>    entire text, all drawings | 1-17 |

Form PCT/ISA/210 (second sheet) (January 2015)

<table>
<tr><td colspan="5"><b>INTERNATIONAL SEARCH REPORT</b><br><b>Information on patent family members</b></td><td>International application No.<br><br><b>PCT/JP2021/025783</b></td></tr>
</table>

| Patent document cited in search report | | | Publication date (day/month/year) | Patent family member(s) | Publication date (day/month/year) |
|---|---|---|---|---|---|
| CN | 109387934 | A | 26 February 2019 | (Family: none) | |
| US | 2018/0053551 | A1 | 22 February 2018 | WO 2016/157184 A1 | |
| CN | 209070256 | U | 05 July 2019 | (Family: none) | |

Form PCT/ISA/210 (patent family annex) (January 2015)

**EP 4 181 031 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. MONROE et al.** Large-scale modular quantum-computer architecture with atomic memory and photonic interconnects. *Phys. Rev. A,* 2014, vol. 89, 022317
- **S. KATO et al.** Observation of dressed states of distant atoms with delocalized photons in coupled-cavities quantum electrodynamics. *Nature Communications,* 2019, vol. 10
- **S. KATO ; T. AOKI.** Strong coupling between a trapped single atom and an all-fiber cavity. *Physical Review Letters,* 2015, vol. 115, 9
- **L.-M. DUAN ; B. WANG ; H. J. KIMBLE.** Robust quantum gates on neutral atoms with cavity-assisted photon scattering. *Phys. Rev. A,* 2015, vol. 72, 032333

- **RAMACHANDRARAO YALLA ; FAM LE KIEN ; M MORINAGA ; K HAKUTA.** Efficient Channeling of Fluorescence Photons From Single Quantum Dots Into Guided Modes of Optical Nanofiber. *Phys Rev Lett.,* 08 August 2012, vol. 109 (6), 063602
- **MASAZUMI FUJIWARA1 ; KAZUMA YOSHIDA1 ; TETSUYA NODA ; HIDEAKI TAKASHIMA ; ANDREAS W SCHELL ; NORIKAZU MIZUOCHI ; SHIGEKI TAKEUCHI.** Manipulation of single nanodiamonds to ultrathin fiber-taper nanofibers and control of NV-spin states toward fiber-integrated λ-systems. *Nanotechnology,* 07 October 2016, vol. 27 (45